# EUROPEAN PATENT SPECIFICATION

(11) **EP 3 193 461 B1**
(45) Date of publication and mention of the grant of the patent: **18.09.2019**
(21) Application number: 14902930.8
(22) Date of filing: 29.09.2014
(51) Int. Cl.: H04B 7/02, H04B 7/024

(54) **WIRELESS COMMUNICATION METHOD, RELATED DEVICE AND SYSTEM**
DRAHTLOSKOMMUNIKATIONSVERFAHREN, ZUGEHÖRIGE VORRICHTUNG UND SYSTEM
PROCÉDÉ DE COMMUNICATION SANS FIL, DISPOSITIF ET SYSTÈME ASSOCIÉS

(43) Date of publication of application: 19.07.2017
(73) Proprietor: Huawei Technologies Co. Ltd., Shenzhen, Guangdong 518129 (CN)
(72) Inventor: LI, Xiaocui, Shenzhen Guangdong 518129 (CN); WANG, Jian, Shenzhen Guangdong 518129 (CN)
(74) Representative: Gill Jennings & Every LLP
(86) International application number: PCT/CN2014/087805
(87) International publication number: WO 2016/049815

(56) References cited:
- EP-A2- 2 662 987
- CN-A- 102 684 835
- CN-A- 103 684 558
- US-A1- 2013 279 361
- QUALCOMM INCORPORATED ET AL: "UE behavior for CRS-IC under signaling", 3GPP DRAFT; R4-132200 FEICIC UE BEHAVIOR FOR CRS-IC UNDER SIGNALING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG4, no. Fukuoka, Japan; 20130520 - 20130524 13 May 2013 (2013-05-13), XP050702398, Retrieved from the Internet: URL:http://www.3gpp.org/ftp/tsg_ran/WG4_Ra dio/TSGR4_67/Docs/ [retrieved on 2013-05-13]
- SAMSUNG: 'CRS presence in flexible subframes' 3GPP TSG RAN WG1 #73, R1-131967 24 May 2013, XP050697751

## Description

### TECHNICAL FIELD

The present invention relates to the field of communications technologies, and in particular, to a wireless communication method, a related device, and a system.

### BACKGROUND

Spectrums used in a wireless communications system are classified into two types: a licensed spectrum (licensed spectrum) and an unlicensed spectrum (unlicensed spectrum). For a commercial mobile communications system, an operator needs to auction a licensed spectrum, and after obtaining authorization, can use the corresponding spectrum to carry out a mobile communications operation activity. An unlicensed spectrum does not need to be auctioned, and any person can legally use these frequency bands, for example, a WiFi device on 2.4 GHz and 5 GHz frequency bands.

A device that can legally use an unlicensed carrier may be classified into two types: The first type is frame based equipment (Frame Based Equipment, FBE for short), and the second type is load based equipment (load based equipment, LBE for short). A channel occupation time is completely random if an LBE method is used. In this case, interference of an LTE-U node to another LTE-U node is completely random. Channel occupation is random if an FBE method is used, but a channel occupation time is fixed if a channel is occupied. Therefore, interference of an LTE-U node to another LTE-U node is random while an appearance time point can be known.

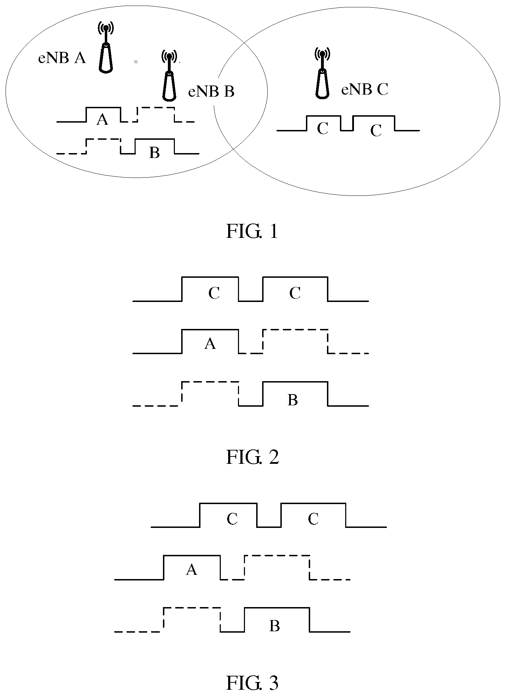

As shown in FIG. 1, an eNB A, eNB B, and eNB C are all LTE-U nodes, and send data in an FBE manner. The eNB A and the eNB B are at a relatively short distance from each other, and interference to each other exceeds a CCA (clear channel access, clear channel access) detection threshold. Therefore, the eNB A and the eNB B occupy a channel in a time division multiplexing manner. In addition, the eNB A and the eNB B are relatively distant from the eNB C, and interference of both the eNB A and the eNB B to the eNB C is less than the CCA detection threshold. Therefore, the eNB C can continuously occupy a channel without data transmission interruption.

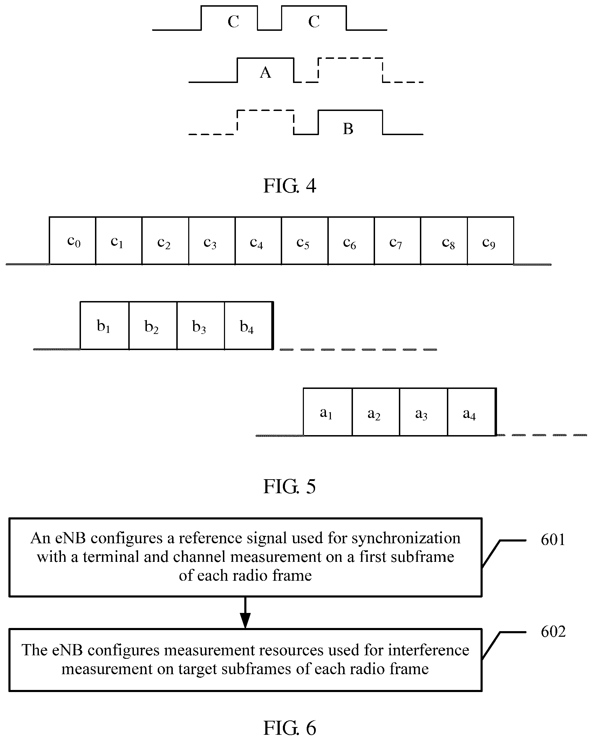

FIG. 2, FIG. 3, and FIG. 4 are interference analyses in three different cases of time sequences. Specifically, in FIG. 2, a frame structure C of the eNB C is completely aligned with a frame structure A of the eNB A and a frame structure B of the eNB B. Therefore, a first frame of the frame structure C is interfered only by the frame structure A, and a second frame of the frame structure C is interfered only by the frame structure B. In FIG. 3, neither a frame structure A of the eNB A nor a frame structure B of the eNB B is aligned with a frame structure C of the eNB C. Therefore, one part of a first frame of the frame structure C is interfered by the frame structure A, and the other part is interfered by the frame structure B; and one part of a second frame of the frame structure C is interfered by the frame structure B, and the other part is not interfered. In FIG. 4, neither a frame structure A of the eNB A nor a frame structure B of the eNB B is aligned with a frame structure C of the eNB C. Therefore, one part of a first frame of the frame structure C is interfered by the frame structure A, and the other part is not interfered; and one part of a second frame of the frame structure C is interfered by the frame structure A, and the other part is interfered by the frame structure B.

In an actual deployment scenario, it is nearly impossible to implement strict synchronization, which requires that frame structures of all nodes are the same in addition to timing aligning. It means that a scenario in which frame structures are not aligned needs to be analyzed and provided with solutions.

FIG. 5 is a detailed analysis of a data frame. It can be learned that, when the FBE is used, in a sent data frame, interference to all data subframes, and even interference to symbols in each data subframe may be different. However, in an FBE mode, when a system reaches a stable state, an interference time point is always static (quasi-static). For example, in FIG. 5, c0 to c4 are interfered by the eNB B, and c5 to c9 are interfered by the eNB A. Therefore, a level of interference to c0 to c4 is different from a level of interference to c5 to c9. According to FIG. 5, it can be found that, if needing to feed back CSI (Channel State Information, channel state information), a receive end needs to separately measure interference to all subframes, so as to obtain an independent level of interference to each subframe, and then obtain independent CSI of each subframe.

In can be learned from the foregoing analysis that, a channel response needs to be independently fed back to each LTE-U subframe. The independently fed back channel response can be appropriately used according to an appropriate channel configuration. That is, the eNB A, the eNB B, and the eNB C use a same period (10 ms) and different transmission modes for transmission. Therefore, different subframes have different pieces of CSI feedback, and CSI feedback of a same subframe can be used in the corresponding subframe in different transmission periods. Periods are the same although transmission modes are different. Therefore, interference statistics features of a same subframe on different data frames are similar. For an LTE-U data frame, a CRS (Cell-specific reference signal, cell-specific reference signal) is used for CSI measurement. Because each subframe has a CRS, corresponding channel measurement of a specific subframe can be implemented by using the CRS. In addition, because each subframe has a CRS, interference and noise measurement of a specific subframe can be implemented by deleting the CRS. In short, if an LTE-U data frame transmits a CRS, CSI measurement of a specific subframe can be implemented on UE.

However, a problem in this method is that an LTE-U node needs to continuously and periodically send a CRS, so as to satisfy a UE subframe CSI feedback requirement. Therefore, the LTE-U node needs to send a CRS even if no data is sent. This is unfriendly to another system that uses a same carrier. Consequently, spectrum resource utilization cannot be improved to save network energy.

QUALCOMM INCORPORATED ET AL: "UE behavior for CRS-IC under signaling", 3GPP DRAFT; R4-132200 FEICIC UE BEHAVIOR FOR CRS-IC UNDER SIGNALING, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; vol. RAN WG4, no. Fukuoka, Japan; 20130520-20130524 13 May 2013 discusses various UE behavior for CRS-IC under signaling.

### SUMMARY

The present invention provides a wireless communication method and a system according to claims 1 and 8 respectively. Further technical features are set out in the respective dependent claims.

The present invention provides a wireless communication method, a related device, and a system that can save network energy and improve spectrum resource utilization. The wireless communication method includes: configuring, by a base station, a reference signal used for channel measurement on a first subframe of each data frame; and configuring, by the base station, measurement resources used for interference measurement on target subframes of each data frame, where the target subframes are all subframes of each data frame or all subframes except the first subframe of each data frame. In the embodiments of the present invention, the base station configures the reference signal used for channel measurement on the first subframe of each data frame. When the base station does not send data to a terminal, a channel may be vacated for use by another system, thereby improving the spectrum resource utilization to save network energy. In addition, the base station configures the measurement resources used for interference measurement on the target subframes of each data frame, so as to ensure that the terminal can independently measure interference to each subframe, thereby improving interference measurement precision.

### BRIEF DESCRIPTION OF DRAWINGS

FIG. 1 is a schematic structural diagram of a wireless communications network;
FIG. 2 is a schematic diagram of an interference analysis in a case of a time sequence;
FIG. 3 is a schematic diagram of an interference analysis in another case of a time sequence;
FIG. 4 is a schematic diagram of an interference analysis in another case of a time sequence;
FIG. 5 is a schematic diagram of an interference analysis in another case of a time sequence;
FIG. 6 is a step flowchart of an example embodiment of a wireless communication method according to an embodiment of the present invention;
FIG. 7 is a schematic diagram of a frame structure of a data frame according to an embodiment of the present invention;
FIG. 8 is a schematic diagram of an example embodiment of a frame structure on which a measurement resource is configured according to an embodiment of the present invention;
FIG. 9 is a schematic diagram of another example embodiment of a frame structure on which a measurement resource is configured according to an embodiment of the present invention;
FIG. 10 is a schematic diagram of another example embodiment of a frame structure on which a measurement resource is configured according to an embodiment of the present invention;
FIG. 11 is a schematic diagram of another example embodiment of a frame structure on which a measurement resource is configured according to an embodiment of the present invention;
FIG. 12 is a step flowchart of another example embodiment of a wireless communication method according to an embodiment of the present invention;
FIG. 13 is a schematic diagram of another example embodiment of a frame structure on which a measurement resource is configured according to an embodiment of the present invention;
FIG. 14 is a schematic diagram of another example embodiment of a frame structure on which a measurement resource is configured according to an embodiment of the present invention;
FIG. 15 is a schematic diagram of another example embodiment of a frame structure on which a measurement resource is configured according to an embodiment of the present invention;
FIG. 16 is a step flowchart of an example embodiment of a wireless communication method according to an embodiment of the present invention;
FIG. 17 is a step flowchart of another example embodiment of a wireless communication method according to an embodiment of the present invention;
FIG. 18 is a schematic structural diagram of an example embodiment of a base station according to an embodiment of the present invention;
FIG. 19 is a schematic structural diagram of another example embodiment of a base station according to an embodiment of the present invention;
FIG. 20 is a schematic structural diagram of an example embodiment of a terminal according to an embodiment of the present invention;
FIG. 21 is a schematic structural diagram of another example embodiment of a terminal according to an embodiment of the present invention;
FIG. 22 is a schematic structural diagram of another example embodiment of a base station according to an embodiment of the present invention; and
FIG. 23 is a schematic structural diagram of an example embodiment of a terminal according to an embodiment of the present invention.

### DESCRIPTION OF EMBODIMENTS

Technologies described in this application can be used in various wireless communications networks, for example, a Code Division Multiple Access (CDMA), a Time Division Multiple Access (TDMA), a Frequency Division Multiple Access (FDMA), an Orthogonal Frequency Division Multiple Access (OFDMA), or a Single Carrier Frequency Division Multiple Access (SC-FDMA) network, or another network. The terms "network" and "system" usually may be mutually interchangeable. A CDMA network can implement a wireless technology such as Universal Terrestrial Radio Access (UTRA), or CDMA 2000 of the Telecommunications Industry Association (TIA). The UTRA technology includes Wideband CDMA (WCDMA) and another variation of the CDMA. The CDMA 2000 technology includes an IS-2000, IS-95, and IS-856 standard from the Electronic Industries Alliance (EIA) and the TIA. The TDMA network can implement a wireless technology such as Global System for Mobile Communications (GSM). The OFDMA network can implement a wireless technology such as evolved UTRA (E-UTRA), Ultra Mobile Broadband (UMB), IEEE802.11 (Wi-Fi), IEEE 802.16 (WiMAX), IEEE 802.20, or Flash-OFDMA. The UTRA technology and the E-UTRA technology are a part of a Universal Mobile Telecommunications System (UMTS). 3GPP Long Term Evolution (LTE) and LTE Advanced (LTE-A) are relatively new versions of a UMTS that uses E-UTRA. The UTRA, E-UTRA, UMTS, LTE, LTE-A, and GSM are described in a document from an organization named "3rd Generation Partnership Project" (3GPP). The CDMA 2000 and UMB are described in a document from an organization named "3rd Generation Partnership Project 2" (3GPP2). The technologies described in this application can be used in the above mentioned wireless network and radio access technologies, or another wireless network and radio access technology. For clarity, the following describes some aspects of these technologies by focusing on the LTE or LTE-A (or collectively referred to as "LTE/-A"), and such LTE/-A terms are used in much of the following description.

With reference to FIG. 6, the following describes in detail a wireless communication method provided in an embodiment of the present invention.

601. A base station configures a reference signal used for synchronization with a terminal and channel measurement on a first subframe of each data frame.

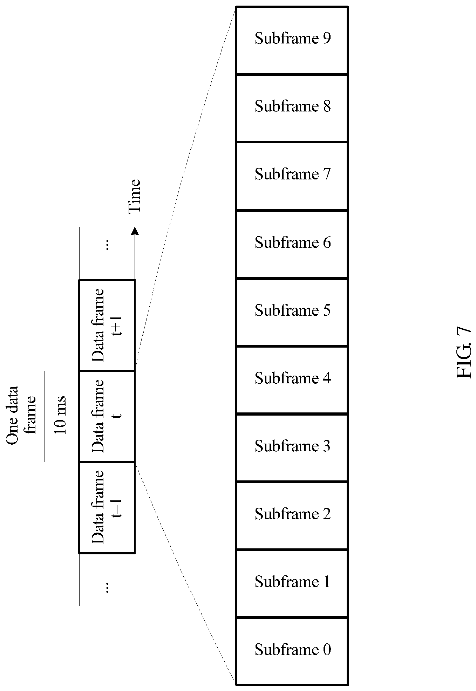

Specifically, for a frame structure of each data frame, refer to FIG. 7. Duration of a data frame may be pre-determined, and in this embodiment, the duration is 10 ms. In addition, as shown in FIG. 7, each data frame is divided into 10 subframes with indexes 0 to 9.

In this embodiment, when sending data frames to a terminal, the base station first configures the reference signal on the first subframe of each data frame, so as to ensure synchronization between the base station and the terminal by using the reference signal. In addition, the terminal can perform channel measurement by using the reference signal, so as to implement link adaptation transmission.

In this embodiment, a reference signal is configured only on the first subframe of each data frame, and no reference signal is configured on a second to a tenth subframes.

An advantage of using a reference signal configuration manner described in this embodiment is: When the base station does not send data to the terminal, because no reference signal is configured on the second to the tenth subframes of each data frame, a channel may be vacated for use by another system (for example, WiFi), thereby improving spectrum resource utilization to save network energy.

The terminal described in this embodiment includes but is not limited to: a cellular phone (for example, a smartphone), a personal digital assistant (PDA), a wireless modem, a wireless communications device, a handheld device, a laptop computer, a cordless telephone set, a wireless local loop (WLL) station, a tablet computer, a netbook, a smartbook, and the like.

The reference signal is not limited in this embodiment, as long as the terminal can perform synchronization with the base station and the channel measurement after the base station sends the reference signal to the terminal.

A specific setting location of the reference signal on the first subframe of each data frame is not limited in this embodiment, as long as the reference signal is on the first subframe of each data frame.

602. The base station configures measurement resources used for interference measurement on target subframes of each data frame.

In this embodiment, the base station may configure the measurement resources on the target subframes, so that the terminal can independently measure interference to each subframe.

In this embodiment, frequencies of the measurement resources configured on all the target subframes may be the same or different, that is, specific frequencies of the measurement resources are not limited in this embodiment.

An example in which the frequencies of all the measurement resources are the same is used in the following description.

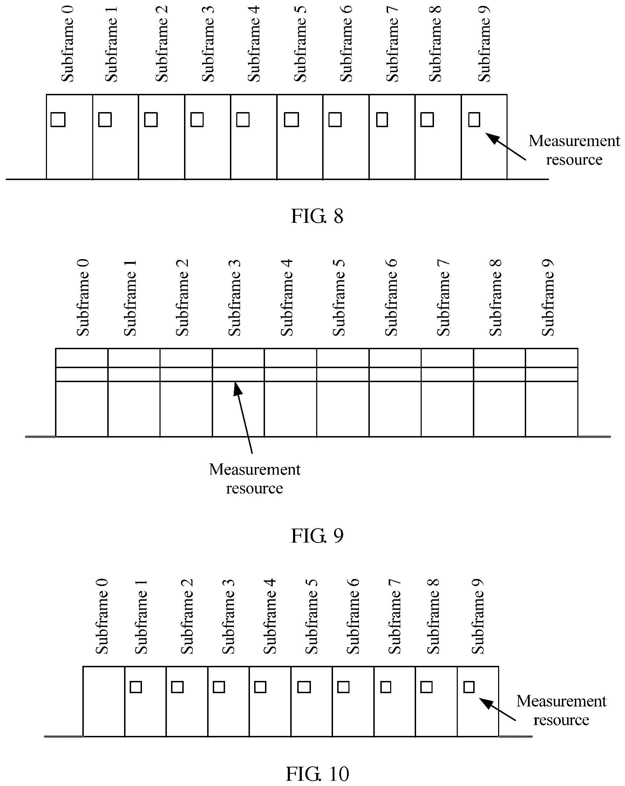

The target subframes may be all subframes of each data frame, a measurement resource is configured on each subframe of all the target subframes, and the frequencies of all the measurement resources on the target subframes are the same. As shown in FIG. 8, FIG. 8 is a schematic diagram of a measurement resource being set on some symbols of each target subframe, that is, in FIG. 8, a measurement resource is set only on some symbols of each target subframe. FIG. 9 is a schematic diagram of a measurement resource being set on all symbols of each target subframe.

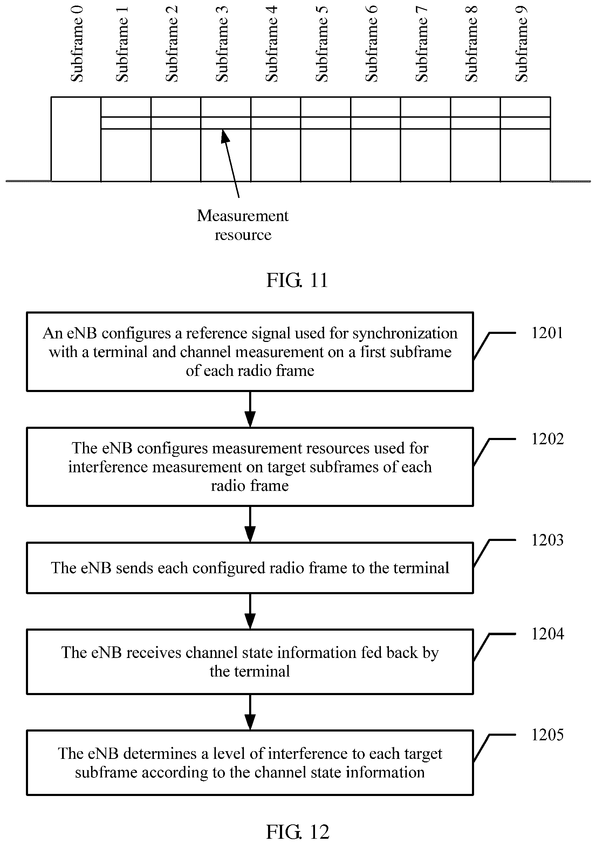

Alternatively, the target subframes may be all subframes except the first subframe, a measurement resource is configured on each subframe of all the target subframes, and the frequencies of all the measurement resources on the target subframes are the same. As shown in FIG. 10, FIG. 10 is a schematic diagram of a measurement resource being set on some symbols of each target subframe, that is, in FIG. 10, a measurement resource is set only on some symbols of each target subframe. FIG. 11 is a schematic diagram of a measurement resource being set on all symbols of each target subframe.

The measurement resources are not limited in this embodiment, as long as power of the measurement resources is zero and the measurement resources can be used by the terminal for interference measurement. Because the measurement resources described in this embodiment are zero-power resources, a subframe on which a measurement resource is set does not occupy a channel. Therefore, when not sending data to the terminal, the base station does not need to occupy a channel resource, thereby saving network overheads.

A specific setting location of the measurement resources is not limited in this embodiment, as long as the measurement resources are on all the subframes of each data frame or on all the subframes except the first subframe.

In this embodiment, the base station configures a reference signal used for synchronization with a terminal and channel measurement on a first subframe of each data frame. When the base station does not send data to the terminal, a channel may be vacated for use by another system, thereby improving spectrum resource utilization to save network energy. In addition, the base station configures measurement resources used for interference measurement on target subframes of each data frame, so as to ensure that the terminal can independently measure interference to each subframe, thereby improving interference measurement precision.

FIG. 6 describes the wireless communication method according to this embodiment of the present invention, and the following further describes the wireless communication method with reference to an embodiment shown in FIG. 12.

1201. A base station configures a reference signal used for synchronization with a terminal and channel measurement on a first subframe of each data frame.

In this embodiment, there are two manners of setting the reference signal. It should be noted that, the manners of setting the reference signal in this embodiment are examples for description instead of limitation.

### A first manner:

The reference signal includes a synchronization signal used for synchronization and a cell-common reference signal CRS, and the cell-common reference signal CRS is used for frequency and time tracking and channel measurement. The synchronization signal may be used by the terminal for cell detection and capture, a specific process is the prior art, and details are not described in this embodiment.

Specifically, the synchronization is divided into two steps: A first step is coarse synchronization, that is, the base station sends the synchronization signal (PSS) to the terminal, so that the terminal determines a specific location of the synchronization signal (PSS) on each data frame. A second step is fine synchronization, that is, the base station determines a correct FFT demodulation window location on the basis of the coarse synchronization, and sends the correct FFT demodulation window location to the terminal by using the cell-common reference signal CRS, so that the terminal performs frequency and time tracking according to the correct FFT demodulation window location.

In this setting manner, the cell-common reference signal CRS is further used for channel measurement.

### A second manner:

The reference signal includes a synchronization signal used for synchronization, a cell-common reference signal CRS used for frequency and time tracking, and a channel state information-reference signal CSI-RS used for channel measurement.

Specifically, the synchronization is divided into two steps: A first step is coarse synchronization, that is, the base station sends the synchronization signal (PSS) to the terminal, so that the terminal determines a specific location of the synchronization signal (PSS) on each data frame. A second step is fine synchronization, that is, the base station determines a correct FFT demodulation window location on the basis of the coarse synchronization, and sends the correct FFT demodulation window location to the terminal by using the cell-common reference signal CRS, so that the terminal performs frequency and time tracking according to the correct FFT demodulation window location.

In this setting manner, the reference signal further includes the channel state information-reference signal CSI-RS used for channel measurement, that is, the terminal performs corresponding channel measurement by using the channel state information-reference signal CSI-RS.

In this embodiment, the reference signal is configured only on the first subframe of each data frame, and no reference signal is configured on a second to a tenth subframes. When the base station does not send data to the terminal, because no reference signal is configured on the second to the tenth subframes of each data frame, a channel may be vacated for use by another system (for example, WiFi), thereby improving spectrum resource utilization to save network energy.

1202. The base station configures measurement resources used for interference measurement on target subframes of each data frame.

In this embodiment, the measurement resources are channel state information-interference measurement resources CSI-IM (Channel State Information-Interference Measurement Resource).

In this embodiment, the base station may configure the channel state information-interference measurement CSI-IM on the target subframes, so that the terminal can independently measure interference to each subframe.

The target subframes may be all subframes of each data frame, that is, because a measurement resource is configured on each subframe of each data frame, the terminal can independently measure the interference to each subframe.

In this embodiment, frequencies of the measurement resources configured on all the target subframes may be the same or different, that is, specific frequencies of the measurement resources are not limited in this embodiment.

An example in which the frequencies of all the measurement resources are the same is used in the following description.

The target subframes may be all subframes of each data frame, a measurement resource is configured on each subframe of all the target subframes, and the frequencies of all the measurement resources on the target subframes are the same. As shown in FIG. 8, FIG. 8 is a schematic diagram of a measurement resource being set on some symbols of each target subframe, that is, in FIG. 8, a measurement resource is set only on some symbols of each target subframe. FIG. 9 is a schematic diagram of a measurement resource being set on all symbols of each target subframe.

Alternatively, the target subframes may be all subframes except the first subframe, a measurement resource is configured on each subframe of all the target subframes, and the frequencies of all the measurement resources on the target subframes are the same. As shown in FIG. 10, FIG. 10 is a schematic diagram of a measurement resource being set on some symbols of each target subframe, that is, in FIG. 10, a measurement resource is set only on some symbols of each target subframe. FIG. 11 is a schematic diagram of a measurement resource being set on all symbols of each target subframe.

Because interference statuses on all symbols of each subframe may be different, in this embodiment, preferably, the measurement resources may be configured on all symbols of the target subframes of each data frame, so as to further improve interference measurement precision.

That is, each target subframe is detailed, and a channel state information-interference measurement CSI-IM resource is configured on each symbol of each target subframe.

That is, the base station groups frequency resources of each subframe into a resource block (PRB) or a resource block pair (PRB pair). There may be one or more resource blocks, and a specific resource block quantity is not limited in this embodiment.

Each resource block includes 12 continuous subcarriers in a frequency domain, and a time slot (each subframe includes two time slots) in a time domain. Therefore, the resource block pair refers to a pair of continuous resource blocks in a subframe.

Specifically, for a specific manner of configuring the channel state information-interference measurement CSI-IM resource on each symbol of each target subframe, refer to the following. It should be noted that, the following manners are examples only for description instead of limitation, as long as the channel state information-interference measurement CSI-IM resource is configured on each symbol.

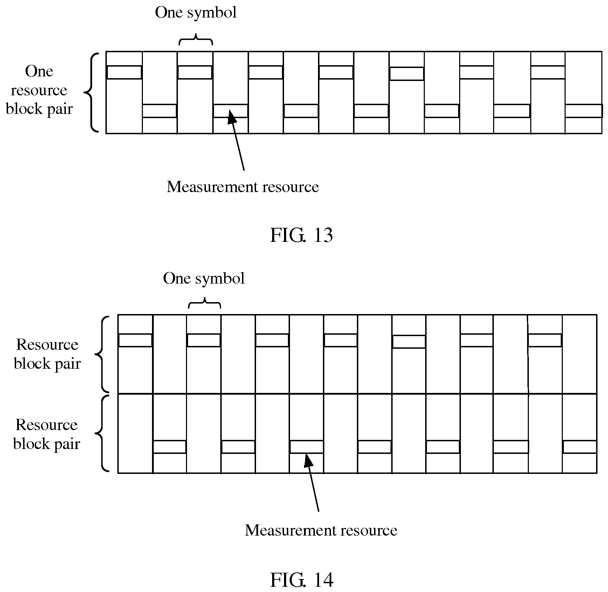

A first manner: As shown in FIG. 13, an example in which the target subframes are all the subframes of each data frame is used for description in FIG. 13. The base station configures the measurement resources on all symbols of each target subframe, and each measurement resource is on each resource block pair of each symbol. In FIG. 13, a resource block pair is used as an example for description, and for a structure of another resource block pair of the target subframe, refer to FIG. 13.

Specifically, in FIG. 13, CSI-IM configured on adjacent symbols use subcarriers of different frequencies. Certainly, CSI-IM configured on adjacent symbols may use subcarriers of a same frequency. That is, a specific frequency of a subcarrier used by a CSI-IM resource on each symbol is not limited in this embodiment.

A second manner: As shown in FIG. 14, an example in which the target subframes are all the subframes of each data frame is used for description in FIG. 14. The base station configures the measurement resources on all symbols of each target subframe, and each measurement resource is on continuous resource block pairs, that is, two adjacent measurement resources are on adjacent resource block pairs. In FIG. 14, any two continuous resource block pairs on the target subframe are used as an example for description, and for a specific structure of another resource block pair of the target subframe, refer to FIG. 14.

Specifically, in FIG. 14, CSI-IM configured on adjacent symbols use subcarriers of different frequencies, and two adjacent CSI-IM are respectively on two different resource block pairs.

Certainly, CSI-IM configured on adjacent symbols may use subcarriers of a same frequency. That is, a specific frequency of a subcarrier used by a CSI-IM resource on each symbol is not limited in this embodiment.

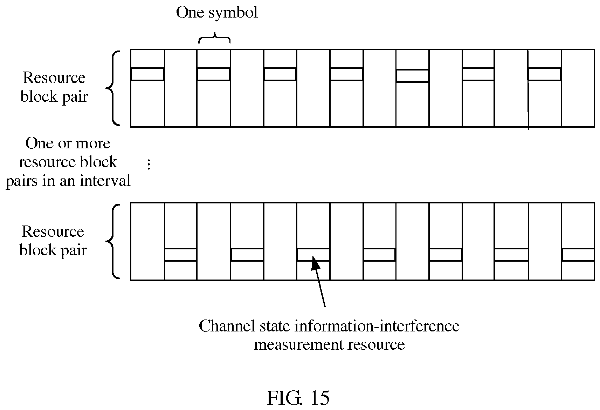

A third manner: As shown in FIG. 15, an example in which the target subframes are all the subframes of each data frame is used for description in FIG. 15. The base station configures the measurement resources on all symbols of each target subframe, and each measurement resource is on discontinuous resource block pairs of each symbol. A specific quantity of continuous resource block pairs between two adjacent symbols is not limited in this embodiment.

Specifically, in FIG. 15, CSI-IM configured on adjacent symbols use subcarriers of different frequencies. Certainly, CSI-IM configured on adjacent symbols may use subcarriers of a same frequency. That is, a specific frequency of a subcarrier used by a CSI-IM resource on each symbol is not limited in this embodiment.

The foregoing setting of the channel state information-interference measurement CSI-IM is an example for description instead of limitation, as long as a channel state information-interference measurement CSI-IM resource is set on each symbol.

1203. The base station sends each configured data frame to the terminal.

After step 1201 and step 1202, the base station completes configuration of a data frame, and may send the configured data frame to the terminal, so that the terminal generates channel interference feedback information CSI (Channel State Information) corresponding to the target subframes according to the measurement resources.

In step 1202, the base station sets a measurement resource on each target subframe of each data frame. Therefore, the terminal may generate channel interference feedback information CSI corresponding to each target subframe according to the measurement resource on each target subframe. Specifically, how the terminal generates the channel interference feedback information CSI according to the measurement resource is the disclosed prior art, and details are not described in this embodiment.

1204. The base station receives the channel interference feedback information fed back by the terminal.

1205. The base station determines a level of interference to each target subframe according to the channel interference feedback information.

In this embodiment, because a measurement resource is set on each target subframe, interference to each target subframe can be independently measured. Therefore, the base station can obtain the independent channel interference feedback information CSI that is of each target subframe and fed back by the terminal, and interference measurement precision is improved.

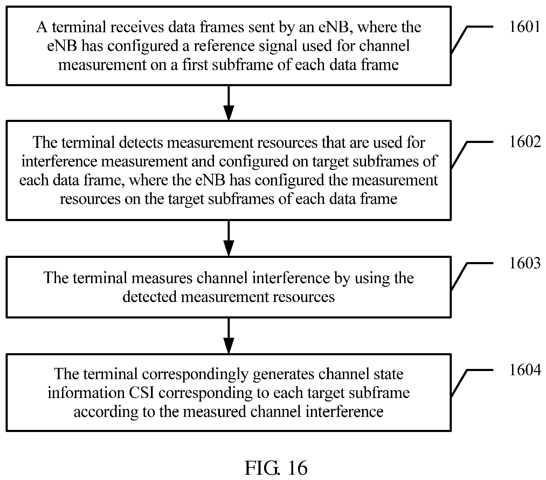

In the foregoing embodiment, how a base station implements the wireless communication method is described in detail, and the following describes how a terminal implements the wireless communication method with reference to an embodiment shown in FIG. 16.

1601. A terminal receives data frames sent by a base station, where the base station has configured a reference signal used for channel measurement on a first subframe of each data frame.

Specifically, for a frame structure of each data frame, refer to FIG. 7. Duration of a data frame is 10 ms. In addition, as shown in FIG. 7, each data frame is divided into 10 subframes with indexes 0 to 9.

In this embodiment, the base station has configured the reference signal on the first subframe of each data frame received by the terminal, so as to ensure synchronization between the base station and the terminal by using the reference signal. In addition, the terminal can perform channel measurement by using the reference signal, so as to implement link adaptation transmission.

In this embodiment, a reference signal is configured only on the first subframe of each data frame, and no reference signal is configured on a second to a tenth subframes.

An advantage of using a reference signal configuration manner described in this embodiment is: When the base station does not send data to the terminal, because no reference signal is configured on the second to the tenth subframes of each data frame, a channel may be vacated for use by another system (for example, WiFi), thereby improving spectrum resource utilization to save network energy.

The reference signal is not limited in this embodiment, as long as the terminal can perform synchronization with the base station and the channel measurement after the base station sends the reference signal to the terminal.

A specific setting location of the reference signal on the first subframe of each data frame is not limited in this embodiment, as long as the reference signal is on the first subframe of each data frame.

1602. The terminal detects measurement resources that are used for interference measurement and configured on target subframes of each data frame, where the base station has configured the measurement resources on the target subframes of each data frame.

In this embodiment, the base station may configure the measurement resources on the target subframes, so that the terminal can independently measure interference to each subframe.

In this embodiment, frequencies of the measurement resources configured on all the target subframes may be the same or different, that is, specific frequencies of the measurement resources are not limited in this embodiment.

An example in which the frequencies of all the measurement resources are the same is used in the following description.

The target subframes may be all subframes of each data frame, a measurement resource is configured on each subframe of all the target subframes, and the frequencies of all the measurement resources on the target subframes are the same. As shown in FIG. 8, FIG. 8 is a schematic diagram of a measurement resource being set on some symbols of each target subframe, that is, in FIG. 8, a measurement resource is set only on some symbols of each target subframe. FIG. 9 is a schematic diagram of a measurement resource being set on all symbols of each target subframe.

Alternatively, the target subframes may be all subframes except the first subframe, a measurement resource is configured on each subframe of all the target subframes, and the frequencies of all the measurement resources on the target subframes are the same. As shown in FIG. 10, FIG. 10 is a schematic diagram of a measurement resource being set on some symbols of each target subframe, that is, in FIG. 10, a measurement resource is set only on some symbols of each target subframe. FIG. 11 is a schematic diagram of a measurement resource being set on all symbols of each target subframe.

The measurement resources are not limited in this embodiment, as long as power of the measurement resources is zero and the measurement resources can be used by the terminal for interference measurement. Because the measurement resources described in this embodiment are zero-power resources, a subframe on which a measurement resource is set does not occupy a channel. Therefore, when not sending data to the terminal, the base station does not need to occupy a channel resource, thereby saving network overheads.

A specific setting location of the measurement resources is not limited in this embodiment, as long as the measurement resources are on all the subframes of each data frame or on all the subframes except the first subframe.

1603. The terminal measures channel interference by using the detected measurement resources.

1604. The terminal correspondingly generates channel state information CSI corresponding to each target subframe according to the measured channel interference.

In this embodiment, the terminal correspondingly generates the channel state information CSI (Channel State Information, channel state information) according to the measured channel interference. Therefore, the terminal can obtain the channel state information CSI corresponding to each target subframe.

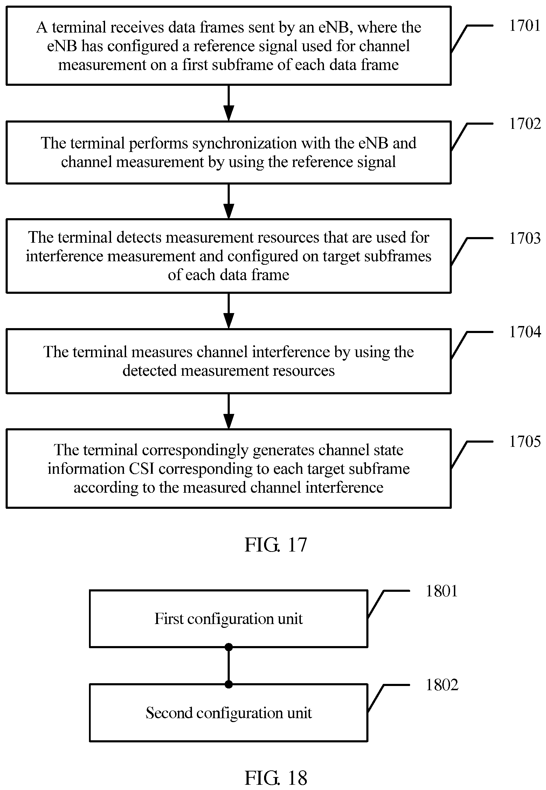

The following further describes the wireless communication method with reference to an embodiment shown in FIG. 17.

1701. A terminal receives data frames sent by a base station, where the base station has configured a reference signal used for channel measurement on a first subframe of each data frame.

For a specific process of step 1701 in this embodiment, refer to step 1601 shown in FIG. 16, and the specific process is not described in detail in this embodiment.

1702. The terminal performs synchronization with the base station and channel measurement by using the reference signal.

In this embodiment, there are two manners of setting the reference signal. It should be noted that, the manners of setting the reference signal in this embodiment are examples for description instead of limitation.

### A first manner:

The reference signal includes a synchronization signal used for synchronization and a cell-common reference signal CRS, and the cell-common reference signal CRS is used for frequency and time tracking and channel measurement. The synchronization signal may be used by the terminal for cell detection and capture, a specific process is the prior art, and details are not described in this embodiment.

Specifically, the synchronization is divided into two steps: A first step is coarse synchronization, that is, the base station sends the synchronization signal (PSS) to the terminal, so that the terminal determines a specific location of the synchronization signal (PSS) on each data frame. A second step is fine synchronization, that is, the base station determines a correct FFT demodulation window location on the basis of the coarse synchronization, and sends the correct FFT demodulation window location to the terminal by using the cell-common reference signal CRS, so that the terminal performs frequency and time tracking according to the correct FFT demodulation window location.

In this setting manner, the cell-common reference signal CRS is further used for channel measurement.

### A second manner:

The reference signal includes a synchronization signal used for synchronization, a cell-common reference signal CRS used for frequency and time tracking, and a channel state information-reference signal CSI-RS used for channel measurement.

Specifically, the synchronization is divided into two steps: A first step is coarse synchronization, that is, the base station sends the synchronization signal (PSS) to the terminal, so that the terminal determines a specific location of the synchronization signal (PSS) on each data frame. A second step is fine synchronization, that is, the base station determines a correct FFT demodulation window location on the basis of the coarse synchronization, and sends the correct FFT demodulation window location to the terminal by using the cell-common reference signal CRS, so that the terminal performs frequency and time tracking according to the correct FFT demodulation window location.

In this setting manner, the reference signal further includes the channel state information-reference signal CSI-RS used for channel measurement, that is, the terminal performs corresponding channel measurement by using the channel state information-reference signal CSI-RS.

In this embodiment, the reference signal is configured only on the first subframe of each data frame, and no reference signal is configured on a second to a tenth subframes. When the base station does not send data to the terminal, because no reference signal is configured on the second to the tenth subframes of each data frame, a channel may be vacated for use by another system (for example, WiFi), thereby improving spectrum resource utilization to save network energy.

1703. The terminal detects measurement resources that are used for interference measurement and configured on target subframes of each data frame.

In this embodiment, the measurement resources are channel state information-interference measurement resources CSI-IM (Channel State Information-Interference Measurement Resource).

In this embodiment, the base station may configure the channel state information-interference measurement CSI-IM on the target subframes, so that the terminal can independently measure interference to each subframe.

The target subframes may be all subframes of each data frame, that is, because a measurement resource is configured on each subframe of each data frame, the terminal can independently measure the interference to each subframe.

In this embodiment, frequencies of the measurement resources configured on all the target subframes may be the same or different, that is, specific frequencies of the measurement resources are not limited in this embodiment.

An example in which the frequencies of all the measurement resources are the same is used in the following description.

The target subframes may be all subframes of each data frame, a measurement resource is configured on each subframe of all the target subframes, and the frequencies of all the measurement resources on the target subframes are the same. As shown in FIG. 8, FIG. 8 is a schematic diagram of a measurement resource being set on some symbols of each target subframe, that is, in FIG. 8, a measurement resource is set only on some symbols of each target subframe. FIG. 9 is a schematic diagram of a measurement resource being set on all symbols of each target subframe.

Alternatively, the target subframes may be all subframes except the first subframe, a measurement resource is configured on each subframe of all the target subframes, and the frequencies of all the measurement resources on the target subframes are the same. As shown in FIG. 10, FIG. 10 is a schematic diagram of a measurement resource being set on some symbols of each target subframe, that is, in FIG. 10, a measurement resource is set only on some symbols of each target subframe. FIG. 11 is a schematic diagram of a measurement resource being set on all symbols of each target subframe.

Because interference statuses on all symbols of each subframe may be different, in this embodiment, preferably, the base station may configure the measurement resources on all symbols of the target subframes of each data frame, so as to further improve interference measurement precision.

That is, each target subframe is detailed, and a channel state information-interference measurement CSI-IM resource is configured on each symbol of each target subframe.

That is, the base station groups frequency resources of each subframe into a resource block (PRB) or a resource block pair (PRB pair). There may be one or more resource blocks, and a specific resource block quantity is not limited in this embodiment.

Each resource block includes 12 continuous subcarriers in a frequency domain, and a time slot (each subframe includes two time slots) in a time domain. Therefore, the resource block pair refers to a pair of continuous resource blocks in a subframe.

Specifically, for a specific manner of configuring the channel state information-interference measurement CSI-IM resource on each symbol of each target subframe, refer to the following. It should be noted that, the following manners are examples only for description instead of limitation, as long as the channel state information-interference measurement CSI-IM resource is configured on each symbol.

A first manner: As shown in FIG. 13, an example in which the target subframes are all the subframes of each data frame is used for description in FIG. 13. The base station configures the measurement resources on all symbols of each target subframe, and each measurement resource is on each resource block pair of each symbol. In FIG. 13, a resource block pair is used as an example for description, and for a structure of another resource block pair of the target subframe, refer to FIG. 13.

Specifically, in FIG. 13, CSI-IM configured on adjacent symbols use subcarriers of different frequencies. Certainly, CSI-IM configured on adjacent symbols may use subcarriers of a same frequency. That is, a specific frequency of a subcarrier used by a CSI-IM resource on each symbol is not limited in this embodiment.

A second manner: As shown in FIG. 14, an example in which the target subframes are all the subframes of each data frame is used for description in FIG. 14. The base station configures the measurement resources on all symbols of each target subframe, and each measurement resource is on continuous resource block pairs, that is, two adjacent measurement resources are on adjacent resource block pairs. In FIG. 14, any two continuous resource block pairs on the target subframe are used as an example for description, and for a specific structure of another resource block pair of the target subframe, refer to FIG. 14.

Specifically, in FIG. 14, CSI-IM configured on adjacent symbols use subcarriers of different frequencies, and two adjacent CSI-IM are respectively on two different resource block pairs.

Certainly, CSI-IM configured on adjacent symbols may use subcarriers of a same frequency. That is, a specific frequency of a subcarrier used by a CSI-IM resource on each symbol is not limited in this embodiment.

A third manner: As shown in FIG. 15, an example in which the target subframes are all the subframes of each data frame is used for description in FIG. 15. The base station configures the measurement resources on all symbols of each target subframe, and each measurement resource is on discontinuous resource block pairs of each symbol. A specific quantity of continuous resource block pairs between two adjacent symbols is not limited in this embodiment.

Specifically, in FIG. 15, CSI-IM configured on adjacent symbols use subcarriers of different frequencies. Certainly, CSI-IM configured on adjacent symbols may use subcarriers of a same frequency. That is, a specific frequency of a subcarrier used by a CSI-IM resource on each symbol is not limited in this embodiment.

The foregoing setting of the channel state information-interference measurement CSI-IM is an example for description instead of limitation, as long as a channel state information-interference measurement CSI-IM resource is set on each symbol.

1704. The terminal measures channel interference by using the detected measurement resources.

Specifically, after the terminal detects that the measurement resources are on all the symbols of each target subframe, the terminal measures the channel interference by using the detected measurement resources that are on all the symbols.

1705. The terminal correspondingly generates channel state information CSI corresponding to each target subframe according to the measured channel interference.

The base station sets a measurement resource on each target subframe of each data frame. Therefore, the terminal may generate the channel interference feedback information CSI corresponding to each target subframe according to the measurement resource on each target subframe. Specifically, how the terminal generates the channel interference feedback information CSI according to the measurement resource is the disclosed prior art, and details are not described in this embodiment.

After the terminal detects that the measurement resources are on all the symbols of each target subframe, the terminal correspondingly generates the channel state information CSI corresponding to each symbol according to the measured channel interference.

In this embodiment, because a measurement resource is set on each target subframe, interference to each target subframe can be independently measured. Therefore, the base station can obtain the independent channel interference feedback information CSI that is of each target subframe and fed back by the terminal, interference measurement precision is improved, and interference is further effectively avoided.

With reference to an embodiment shown in FIG. 18, the following describes a structure of a base station that can implement a wireless communication method.

As shown in FIG. 18, the base station includes :
The first configuration unit 1801 is configured to configure a reference signal used for channel measurement on a first subframe of each data frame.

Specifically, for a frame structure of each data frame, refer to FIG. 7. Duration of a data frame is 10 ms. In addition, as shown in FIG. 7, each data frame is divided into 10 subframes with indexes 0 to 9.

In this embodiment, when sending data frames to a terminal, the base station first configures the reference signal on the first subframe of each data frame, so as to ensure synchronization between the base station and the terminal by using the reference signal. In addition, the terminal can perform channel measurement by using the reference signal, so as to implement link adaptation transmission.

In this embodiment, a reference signal is configured only on the first subframe of each data frame, and no reference signal is configured on a second to a tenth subframes.

An advantage of using a reference signal configuration manner described in this embodiment is: When the base station does not send data to the terminal, because no reference signal is configured on the second to the tenth subframes of each data frame, a channel may be vacated for use by another system (for example, WiFi), thereby improving spectrum resource utilization to save network energy.

The terminal described in this embodiment includes but is not limited to: a cellular phone (for example, a smartphone), a personal digital assistant (PDA), a wireless modem, a wireless communications device, a handheld device, a laptop computer, a cordless telephone set, a wireless local loop (WLL) station, a tablet computer, a netbook, a smartbook, and the like.

The reference signal is not limited in this embodiment, as long as the terminal can perform synchronization with the base station and the channel measurement after the base station sends the reference signal to the terminal.

A specific setting location of the reference signal on the first subframe of each data frame is not limited in this embodiment, as long as the reference signal is on the first subframe of each data frame.

The second configuration unit 1802 is configured to configure measurement resources used for interference measurement on target subframes of each data frame, where the target subframes are all subframes of each data frame or all subframes except the first subframe of each data frame.

In this embodiment, the base station may configure the measurement resources on the target subframes, so that the terminal can independently measure interference to each subframe.

In this embodiment, frequencies of the measurement resources configured on all the target subframes may be the same or different, that is, specific frequencies of the measurement resources are not limited in this embodiment.

An example in which the frequencies of all the measurement resources are the same is used in the following description.

The target subframes may be all subframes of each data frame, a measurement resource is configured on each subframe of all the target subframes, and the frequencies of all the measurement resources on the target subframes are the same. As shown in FIG. 8, FIG. 8 is a schematic diagram of a measurement resource being set on some symbols of each target subframe, that is, in FIG. 8, a measurement resource is set only on some symbols of each target subframe. FIG. 9 is a schematic diagram of a measurement resource being set on all symbols of each target subframe.

Alternatively, the target subframes may be all subframes except the first subframe, a measurement resource is configured on each subframe of all the target subframes, and the frequencies of all the measurement resources on the target subframes are the same. As shown in FIG. 10, FIG. 10 is a schematic diagram of a measurement resource being set on some symbols of each target subframe, that is, in FIG. 10, a measurement resource is set only on some symbols of each target subframe. FIG. 11 is a schematic diagram of a measurement resource being set on all symbols of each target subframe.

The measurement resources are not limited in this embodiment, as long as power of the measurement resources is zero and the measurement resources can be used by the terminal for interference measurement. Because the measurement resources described in this embodiment are zero-power resources, a subframe on which a measurement resource is set does not occupy a channel. Therefore, when not sending data to the terminal, the base station does not need to occupy a channel resource, thereby saving network overheads.

A specific setting location of the measurement resources is not limited in this embodiment, as long as the measurement resources are on all the subframes of each data frame or on all the subframes except the first subframe.

In this embodiment, the base station configures a reference signal used for synchronization with a terminal and channel measurement on a first subframe of each data frame. When the base station does not send data to the terminal, a channel may be vacated for use by another system, thereby improving spectrum resource utilization to save network energy. In addition, the base station configures measurement resources used for interference measurement on target subframes of each data frame, so as to ensure that the terminal can independently measure interference to each subframe, thereby improving interference measurement precision.

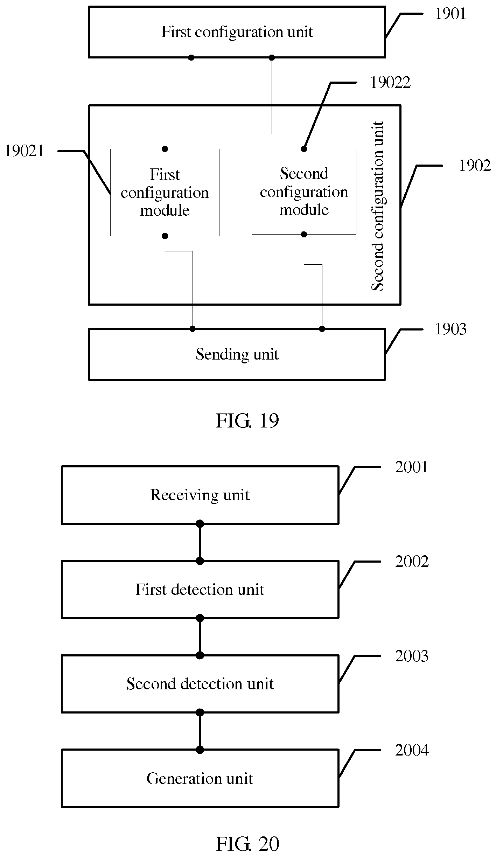

The following further describes a specific structure of the base station with reference to FIG. 19.

The base station includes a first configuration unit 1901, a second configuration unit 1902, and a sending unit 1903.

The first configuration unit 1901 is configured to configure a reference signal used for channel measurement on a first subframe of each data frame.

In this embodiment, there are two manners of setting the reference signal. It should be noted that, the manners of setting the reference signal in this embodiment are examples for description instead of limitation.

### A first manner:

The reference signal includes a synchronization signal used for synchronization and a cell-common reference signal CRS, and the cell-common reference signal CRS is used for frequency and time tracking and channel measurement. The synchronization signal may be used by the terminal for cell detection and capture, a specific process is the prior art, and details are not described in this embodiment.

Specifically, the synchronization is divided into two steps: A first step is coarse synchronization, that is, the base station sends the synchronization signal (PSS) to the terminal, so that the terminal determines a specific location of the synchronization signal (PSS) on each data frame. A second step is fine synchronization, that is, the base station determines a correct FFT demodulation window location on the basis of the coarse synchronization, and sends the correct FFT demodulation window location to the terminal by using the cell-common reference signal CRS, so that the terminal performs frequency and time tracking according to the correct FFT demodulation window location.

In this setting manner, the cell-common reference signal CRS is further used for channel measurement.

### A second manner:

The reference signal includes a synchronization signal used for synchronization, a cell-common reference signal CRS used for frequency and time tracking, and a channel state information-reference signal CSI-RS used for channel measurement.

Specifically, the synchronization is divided into two steps: A first step is coarse synchronization, that is, the base station sends the synchronization signal (PSS) to the terminal, so that the terminal determines a specific location of the synchronization signal (PSS) on each data frame. A second step is fine synchronization, that is, the base station determines a correct FFT demodulation window location on the basis of the coarse synchronization, and sends the correct FFT demodulation window location to the terminal by using the cell-common reference signal CRS, so that the terminal performs frequency and time tracking according to the correct FFT demodulation window location.

In this setting manner, the reference signal further includes the channel state information-reference signal CSI-RS used for channel measurement, that is, the terminal performs corresponding channel measurement by using the channel state information-reference signal CSI-RS.

In this embodiment, the reference signal is configured only on the first subframe of each data frame, and no reference signal is configured on a second to a tenth subframes. When the base station does not send data to the terminal, because no reference signal is configured on the second to the tenth subframes of each data frame, a channel may be vacated for use by another system (for example, WiFi), thereby improving spectrum resource utilization to save network energy.

The second configuration unit 1902 is configured to configure measurement resources used for interference measurement on target subframes of each data frame, where the target subframes are all subframes of each data frame or all subframes except the first subframe of each data frame.

Specifically, the second configuration unit 1902 includes a first configuration module 19021 and a second configuration module 19022.

The first configuration module 19021 is configured to configure the measurement resources on all symbols of each target subframe, where each measurement resource is on each resource block pair of each symbol.

More specifically, the first configuration module 19021 is further configured to: measurement resources configured on adjacent symbols use subcarriers of a same frequency, or measurement resources configured on adjacent symbols use subcarriers of different frequencies.

The second configuration module 19022 is configured to configure the measurement resources on all symbols of each target subframe, where each measurement resource is on discontinuous resource block pairs of each symbol.

More specifically, the second configuration module 19022 is further configured to: measurement resources configured on adjacent symbols use subcarriers of a same frequency, or measurement resources configured on adjacent symbols use subcarriers of different frequencies.

In this embodiment, the measurement resources are channel state information-interference measurement resources CSI-IM (Channel State Information-Interference Measurement Resource).

In this embodiment, the base station may configure the channel state information-interference measurement CSI-IM on the target subframes, so that the terminal can independently measure interference to each subframe.

The target subframes may be all subframes of each data frame, that is, because a measurement resource is configured on each subframe of each data frame, the terminal can independently measure the interference to each subframe.

In this embodiment, frequencies of the measurement resources configured on all the target subframes may be the same or different, that is, specific frequencies of the measurement resources are not limited in this embodiment.

An example in which the frequencies of all the measurement resources are the same is used in the following description.

The target subframes may be all subframes of each data frame, a measurement resource is configured on each subframe of all the target subframes, and the frequencies of all the measurement resources on the target subframes are the same. As shown in FIG. 8, FIG. 8 is a schematic diagram of a measurement resource being set on some symbols of each target subframe, that is, in FIG. 8, a measurement resource is set only on some symbols of each target subframe. FIG. 9 is a schematic diagram of a measurement resource being set on all symbols of each target subframe.

Alternatively, the target subframes may be all subframes except the first subframe, a measurement resource is configured on each subframe of all the target subframes, and the frequencies of all the measurement resources on the target subframes are the same. As shown in FIG. 10, FIG. 10 is a schematic diagram of a measurement resource being set on some symbols of each target subframe, that is, in FIG. 10, a measurement resource is set only on some symbols of each target subframe. FIG. 11 is a schematic diagram of a measurement resource being set on all symbols of each target subframe.

Because interference statuses on all symbols of each subframe may be different, in this embodiment, preferably, the measurement resources may be configured on all symbols of the target subframes of each data frame, so as to further improve interference measurement precision.

That is, each target subframe is detailed, and a channel state information-interference measurement CSI-IM resource is configured on each symbol of each target subframe.

That is, the base station groups frequency resources of each subframe into a resource block (PRB) or a resource block pair (PRB pair). There may be one or more resource blocks, and a specific resource block quantity is not limited in this embodiment.

Each resource block includes 12 continuous subcarriers in a frequency domain, and a time slot (each subframe includes two time slots) in a time domain. Therefore, the resource block pair refers to a pair of continuous resource blocks in a subframe.

Specifically, for a specific manner of configuring the channel state information-interference measurement CSI-IM resource on each symbol of each target subframe, refer to the following. It should be noted that, the following manners are examples only for description instead of limitation, as long as the channel state information-interference measurement CSI-IM resource is configured on each symbol.

A first manner: As shown in FIG. 13, an example in which the target subframes are all the subframes of each data frame is used for description in FIG. 13. The base station configures the measurement resources on all symbols of each target subframe, and each measurement resource is on each resource block pair of each symbol. In FIG. 13, a resource block pair is used as an example for description, and for a structure of another resource block pair of the target subframe, refer to FIG. 13.

Specifically, in FIG. 13, CSI-IM configured on adjacent symbols use subcarriers of different frequencies. Certainly, CSI-IM configured on adjacent symbols may use subcarriers of a same frequency. That is, a specific frequency of a subcarrier used by a CSI-IM resource on each symbol is not limited in this embodiment.

A second manner: As shown in FIG. 14, an example in which the target subframes are all the subframes of each data frame is used for description in FIG. 14. The base station configures the measurement resources on all symbols of each target subframe, and each measurement resource is on continuous resource block pairs, that is, two adjacent measurement resources are on adjacent resource block pairs. In FIG. 14, any two continuous resource block pairs on the target subframe are used as an example for description, and for a specific structure of another resource block pair of the target subframe, refer to FIG. 14.

Specifically, in FIG. 14, CSI-IM configured on adjacent symbols use subcarriers of different frequencies, and two adjacent CSI-IM are respectively on two different resource block pairs.

Certainly, CSI-IM configured on adjacent symbols may use subcarriers of a same frequency. That is, a specific frequency of a subcarrier used by a CSI-IM resource on each symbol is not limited in this embodiment.

A third manner: As shown in FIG. 15, an example in which the target subframes are all the subframes of each data frame is used for description in FIG. 15. The base station configures the measurement resources on all symbols of each target subframe, and each measurement resource is on discontinuous resource block pairs of each symbol. A specific quantity of continuous resource block pairs between two adjacent symbols is not limited in this embodiment.

Specifically, in FIG. 15, CSI-IM configured on adjacent symbols use subcarriers of different frequencies. Certainly, CSI-IM configured on adjacent symbols may use subcarriers of a same frequency. That is, a specific frequency of a subcarrier used by a CSI-IM resource on each symbol is not limited in this embodiment.

The foregoing setting of the channel state information-interference measurement CSI-IM is an example for description instead of limitation, as long as a channel state information-interference measurement CSI-IM resource is set on each symbol.

The sending unit 1903 is configured to send each configured data frame to the terminal, so that the terminal measures channel interference by using the measurement resources.

The base station may send the configured data frame to the terminal, so that the terminal generates channel interference feedback information CSI (Channel State Information) corresponding to the target subframes according to the measurement resources.

The base station sets a measurement resource on each target subframe of each data frame. Therefore, the terminal may generate channel interference feedback information CSI corresponding to each target subframe according to the measurement resource on each target subframe. Specifically, how the terminal generates the channel interference feedback information CSI according to the measurement resource is the disclosed prior art, and details are not described in this embodiment.

The following describes a specific structure of a terminal with reference to FIG. 20.

As shown in FIG. 20, the terminal includes a receiving unit 2001, a first detection unit 2002, a second detection unit 2003, and a generation unit 2004.

The receiving unit 2001 is configured to receive data frames sent by a base station, where the base station has configured a reference signal used for channel measurement on a first subframe of each data frame.

Specifically, for a frame structure of each data frame, refer to FIG. 7. Duration of a data frame is 10 ms. In addition, as shown in FIG. 7, each data frame is divided into 10 subframes with indexes 0 to 9.

In this embodiment, the base station has configured the reference signal on the first subframe of each data frame received by the terminal, so as to ensure synchronization between the base station and the terminal by using the reference signal. In addition, the terminal can perform channel measurement by using the reference signal, so as to implement link adaptation transmission.

In this embodiment, a reference signal is configured only on the first subframe of each data frame, and no reference signal is configured on a second to a tenth subframes.

An advantage of using a reference signal configuration manner described in this embodiment is: When the base station does not send data to the terminal, because no reference signal is configured on the second to the tenth subframes of each data frame, a channel may be vacated for use by another system (for example, WiFi), thereby improving spectrum resource utilization to save network energy.

The reference signal is not limited in this embodiment, as long as the terminal can perform synchronization with the base station and the channel measurement after the base station sends the reference signal to the terminal.

A specific setting location of the reference signal on the first subframe of each data frame is not limited in this embodiment, as long as the reference signal is on the first subframe of each data frame.

The first detection unit 2002 is configured to detect measurement resources that are used for interference measurement and configured on target subframes of each data frame, where the base station has configured the measurement resources on the target subframes of each data frame, and the target subframes are all subframes of each data frame or all subframes except the first subframe of each data frame.

In this embodiment, the base station may configure the measurement resources on the target subframes, so that the terminal can independently measure interference to each subframe.

In this embodiment, frequencies of the measurement resources configured on all the target subframes may be the same or different, that is, specific frequencies of the measurement resources are not limited in this embodiment.

An example in which the frequencies of all the measurement resources are the same is used in the following description.

The target subframes may be all subframes of each data frame, a measurement resource is configured on each subframe of all the target subframes, and the frequencies of all the measurement resources on the target subframes are the same. As shown in FIG. 8, FIG. 8 is a schematic diagram of a measurement resource being set on some symbols of each target subframe, that is, in FIG. 8, a measurement resource is set only on some symbols of each target subframe. FIG. 9 is a schematic diagram of a measurement resource being set on all symbols of each target subframe.

Alternatively, the target subframes may be all subframes except the first subframe, a measurement resource is configured on each subframe of all the target subframes, and the frequencies of all the measurement resources on the target subframes are the same. As shown in FIG. 10, FIG. 10 is a schematic diagram of a measurement resource being set on some symbols of each target subframe, that is, in FIG. 10, a measurement resource is set only on some symbols of each target subframe. FIG. 11 is a schematic diagram of a measurement resource being set on all symbols of each target subframe.

The measurement resources are not limited in this embodiment, as long as power of the measurement resources is zero and the measurement resources can be used by the terminal for interference measurement. Because the measurement resources described in this embodiment are zero-power resources, a subframe on which a measurement resource is set does not occupy a channel. Therefore, when not sending data to the terminal, the base station does not need to occupy a channel resource, thereby saving network overheads.

A specific setting location of the measurement resources is not limited in this embodiment, as long as the measurement resources are on all the subframes of each data frame or on all the subframes except the first subframe.

The second detection unit 2003 is configured to measure channel interference by using the detected measurement resources.

The generation unit 2004 is configured to correspondingly generate channel state information CSI corresponding to each target subframe according to the measured channel interference.

In this embodiment, the terminal correspondingly generates the channel state information CSI (Channel State Information, channel state information) according to the measured channel interference. Therefore, the terminal can obtain the channel state information CSI corresponding to each target subframe.

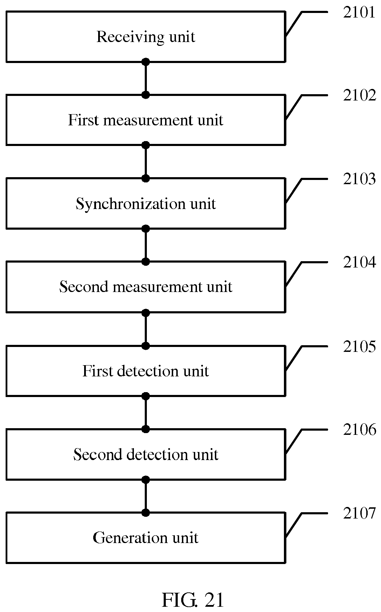

The following further describes a specific structure of the terminal with reference to FIG. 21. The terminal includes a receiving unit 2101, a first measurement unit 2102, a synchronization unit 2103, a second measurement unit 2104, a first detection unit 2105, a second detection unit 2106, and a generation unit 2107.

The receiving unit 2101 is configured to receive data frames sent by a base station, where the base station has configured a reference signal used for channel measurement on a first subframe of each data frame.

The first measurement unit 2102 is configured to perform synchronization with the base station and channel measurement by using the reference signal, where the reference signal includes a synchronization signal used for synchronization and a cell-common reference signal CRS, and the cell-common reference signal CRS is used for frequency and time tracking and channel measurement.

The synchronization unit 2103 is configured to perform synchronization with the base station by using the synchronization signal and the cell-common reference signal CRS, where the reference signal includes the synchronization signal used for synchronization, the cell-common reference signal CRS used for frequency and time tracking, and a channel state information-reference signal CSI-RS used for channel measurement.

The second measurement unit 2104 is configured to perform channel measurement by using the channel state information-reference signal CSI-RS.

In this embodiment, there are two manners of setting the reference signal. It should be noted that, the manners of setting the reference signal in this embodiment are examples for description instead of limitation.

### A first manner:

The reference signal includes a synchronization signal used for synchronization and a cell-common reference signal CRS, and the cell-common reference signal CRS is used for frequency and time tracking and channel measurement. The synchronization signal may be used by the terminal for cell detection and capture, a specific process is the prior art, and details are not described in this embodiment.

Specifically, the synchronization is divided into two steps: A first step is coarse synchronization, that is, the base station sends the synchronization signal (PSS) to the terminal, so that the terminal determines a specific location of the synchronization signal (PSS) on each data frame. A second step is fine synchronization, that is, the base station determines a correct FFT demodulation window location on the basis of the coarse synchronization, and sends the correct FFT demodulation window location to the terminal by using the cell-common reference signal CRS, so that the terminal performs frequency and time tracking according to the correct FFT demodulation window location.

In this setting manner, the cell-common reference signal CRS is further used for channel measurement.

### A second manner:

The reference signal includes a synchronization signal used for synchronization, a cell-common reference signal CRS used for frequency and time tracking, and a channel state information-reference signal CSI-RS used for channel measurement.

Specifically, the synchronization is divided into two steps: A first step is coarse synchronization, that is, the base station sends the synchronization signal (PSS) to the terminal, so that the terminal determines a specific location of the synchronization signal (PSS) on each data frame. A second step is fine synchronization, that is, the base station determines a correct FFT demodulation window location on the basis of the coarse synchronization, and sends the correct FFT demodulation window location to the terminal by using the cell-common reference signal CRS, so that the terminal performs frequency and time tracking according to the correct FFT demodulation window location.

In this setting manner, the reference signal further includes the channel state information-reference signal CSI-RS used for channel measurement, that is, the terminal performs corresponding channel measurement by using the channel state information-reference signal CSI-RS.

In this embodiment, the reference signal is configured only on the first subframe of each data frame, and no reference signal is configured on a second to a tenth subframes. When the base station does not send data to the terminal, because no reference signal is configured on the second to the tenth subframes of each data frame, a channel may be vacated for use by another system (for example, WiFi), thereby improving spectrum resource utilization to save network energy.

The first detection unit 2105 is configured to detect measurement resources that are used for interference measurement and configured on target subframes of each data frame, where the base station has configured the measurement resources on the target subframes of each data frame, and the target subframes are all subframes of each data frame or all subframes except the first subframe of each data frame.

Specifically, the first detection unit 2105 is further configured to detect that the measurement resources are on all symbols of each target subframe, and each measurement resource is on each resource block pair of each symbol, or each measurement resource is on discontinuous resource block pairs of each symbol, where measurement resources configured on adjacent symbols use subcarriers of a same frequency, or measurement resources configured on adjacent symbols use subcarriers of different frequencies.

In this embodiment, the measurement resources are channel state information-interference measurement resources CSI-IM (Channel State Information-Interference Measurement Resource).

In this embodiment, the base station may configure the channel state information-interference measurement CSI-IM on the target subframes, so that the terminal can independently measure interference to each subframe.

The target subframes may be all subframes of each data frame, that is, because a measurement resource is configured on each subframe of each data frame, the terminal can independently measure the interference to each subframe.

In this embodiment, frequencies of the measurement resources configured on all the target subframes may be the same or different, that is, specific frequencies of the measurement resources are not limited in this embodiment.

An example in which the frequencies of all the measurement resources are the same is used in the following description.

The target subframes may be all subframes of each data frame, a measurement resource is configured on each subframe of all the target subframes, and the frequencies of all the measurement resources on the target subframes are the same. As shown in FIG. 8, FIG. 8 is a schematic diagram of a measurement resource being set on some symbols of each target subframe, that is, in FIG. 8, a measurement resource is set only on some symbols of each target subframe. FIG. 9 is a schematic diagram of a measurement resource being set on all symbols of each target subframe.

Alternatively, the target subframes may be all subframes except the first subframe, a measurement resource is configured on each subframe of all the target subframes, and the frequencies of all the measurement resources on the target subframes are the same. As shown in FIG. 10, FIG. 10 is a schematic diagram of a measurement resource being set on some symbols of each target subframe, that is, in FIG. 10, a measurement resource is set only on some symbols of each target subframe. FIG. 11 is a schematic diagram of a measurement resource being set on all symbols of each target subframe.

Because interference statuses on all symbols of each subframe may be different, in this embodiment, preferably, the base station may configure the measurement resources on all symbols of the target subframes of each data frame, so as to further improve interference measurement precision.

That is, each target subframe is detailed, and a channel state information-interference measurement CSI-IM resource is configured on each symbol of each target subframe.

That is, the base station groups frequency resources of each subframe into a resource block (PRB) or a resource block pair (PRB pair). There may be one or more resource blocks, and a specific resource block quantity is not limited in this embodiment.

Each resource block includes 12 continuous subcarriers in a frequency domain, and a time slot (each subframe includes two time slots) in a time domain. Therefore, the resource block pair refers to a pair of continuous resource blocks in a subframe.

Specifically, for a specific manner of configuring the channel state information-interference measurement CSI-IM resource on each symbol of each target subframe, refer to the following. It should be noted that, the following manners are examples only for description instead of limitation, as long as the channel state information-interference measurement CSI-IM resource is configured on each symbol.

A first manner: As shown in FIG. 13, an example in which the target subframes are all the subframes of each data frame is used for description in FIG. 13. The base station configures the measurement resources on all symbols of each target subframe, and each measurement resource is on each resource block pair of each symbol. In FIG. 13, a resource block pair is used as an example for description, and for a structure of another resource block pair of the target subframe, refer to FIG. 13.

Specifically, in FIG. 13, CSI-IM configured on adjacent symbols use subcarriers of different frequencies. Certainly, CSI-IM configured on adjacent symbols may use subcarriers of a same frequency. That is, a specific frequency of a subcarrier used by a CSI-IM resource on each symbol is not limited in this embodiment.

A second manner: As shown in FIG. 14, an example in which the target subframes are all the subframes of each data frame is used for description in FIG. 14. The base station configures the measurement resources on all symbols of each target subframe, and each measurement resource is on continuous resource block pairs, that is, two adjacent measurement resources are on adjacent resource block pairs. In FIG. 14, any two continuous resource block pairs on the target subframe are used as an example for description, and for a specific structure of another resource block pair of the target subframe, refer to FIG. 14.

Specifically, in FIG. 14, CSI-IM configured on adjacent symbols use subcarriers of different frequencies, and two adjacent CSI-IM are respectively on two different resource block pairs.

Certainly, CSI-IM configured on adjacent symbols may use subcarriers of a same frequency. That is, a specific frequency of a subcarrier used by a CSI-IM resource on each symbol is not limited in this embodiment.

A third manner: As shown in FIG. 15, an example in which the target subframes are all the subframes of each data frame is used for description in FIG. 15. The base station configures the measurement resources on all symbols of each target subframe, and each measurement resource is on discontinuous resource block pairs of each symbol. A specific quantity of continuous resource block pairs between two adjacent symbols is not limited in this embodiment.

Specifically, in FIG. 15, CSI-IM configured on adjacent symbols use subcarriers of different frequencies. Certainly, CSI-IM configured on adjacent symbols may use subcarriers of a same frequency. That is, a specific frequency of a subcarrier used by a CSI-IM resource on each symbol is not limited in this embodiment.

The foregoing setting of the channel state information-interference measurement CSI-IM is an example for description instead of limitation, as long as a channel state information-interference measurement CSI-IM resource is set on each symbol.

The second detection unit 2106 is configured to measure channel interference by using the detected measurement resources.

Specifically, the second detection unit 2106 is further configured to measure the channel interference by using the detected measurement resources that are on all the symbols.

Specifically, after the terminal detects that the measurement resources are on all the symbols of each target subframe, the terminal measures the channel interference by using the detected measurement resources that are on all the symbols.

The generation unit 2107 is configured to correspondingly generate channel state information CSI corresponding to each target subframe according to the measured channel interference.

Specifically, the generation unit 2107 is further configured to correspondingly generate channel state information CSI corresponding to each symbol according to the measured channel interference.

The base station sets a measurement resource on each target subframe of each data frame. Therefore, the terminal may generate the channel interference feedback information CSI corresponding to each target subframe according to the measurement resource on each target subframe. Specifically, how the terminal generates the channel interference feedback information CSI according to the measurement resource is the disclosed prior art, and details are not described in this embodiment.

After the terminal detects that the measurement resources are on all the symbols of each target subframe, the terminal correspondingly generates the channel state information CSI corresponding to each symbol according to the measured channel interference.

In this embodiment, because a measurement resource is set on each target subframe, interference to each target subframe can be independently measured. Therefore, the base station can obtain the independent channel interference feedback information CSI that is of each target subframe and fed back by the terminal, interference measurement precision is improved, and interference is further effectively avoided.

An embodiment of the present invention further provides a system that can save network energy and improve spectrum resource utilization. The system includes a base station and a terminal connected to the base station. For a specific working process and a specific structure of the base station, refer to the foregoing embodiment. For a specific working process and a specific structure of the terminal, refer to the foregoing embodiment. Details are not described in this embodiment.

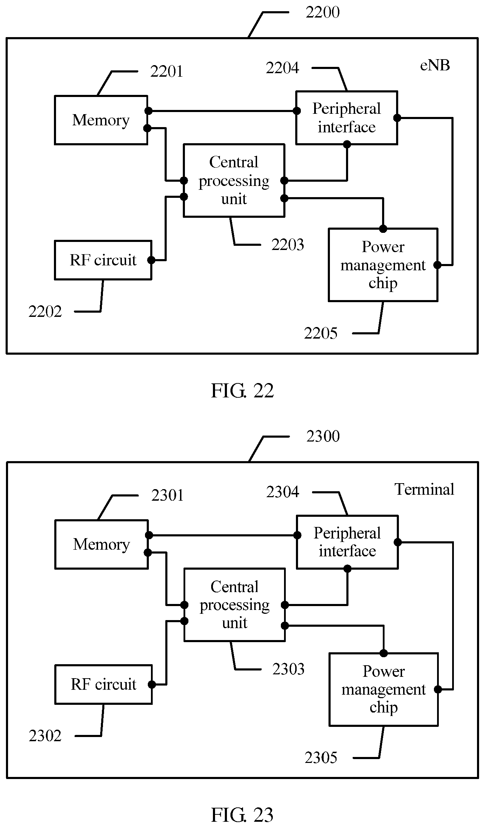

The foregoing describes the base station in the embodiments of the present invention from a perspective of a cellular functional entity, and the following describes the base station in the embodiments of the present invention from a perspective of hardware processing. Referring to FIG. 22, another embodiment of a base station 2200 in the embodiments of the present invention includes.

It should be understood that, the base station 2200 shown in the figure is merely an example of a wearable electronic device, and the base station 2200 may have more or fewer parts than those shown in the figure, and may combine two or more parts or have different parts configurations. Various parts shown in the figure may be implemented in hardware that includes one or more signal processing circuits and/or application-specific integrated circuits, software, or a combination of hardware and software.

It should be noted that, the base station 2200 provided in this embodiment is merely an example of the base station. The base station involved in this embodiment of the present invention may have more or fewer parts than those shown in FIG. 22, may combine two or more parts, or may have different part configurations or settings. Various parts may be implemented in hardware that includes one or more signal processing circuits and/or application-specific integrated circuits, software, or a combination of hardware and software.

The following describes in detail the base station that is configured for controlling a terminal device and is provided in this embodiment.

Memory 2201: The memory 2201 may be accessed by a central processing unit 2203, a peripheral interface 2204, or the like, and the memory 2201 may include a high-speed random access memory, and may further include a non-volatile memory, for example, one or more magnetic disk storage devices, a flash device, or another volatile solid-state storage device.

Peripheral interface 2204: The peripheral interface may connect device input and output peripherals to the central processing unit 2203 and the memory 2201.

RF circuit 2202: The RF circuit 2202 is mainly configured to establish communication between a base station and a wireless network, that is, each terminal device connected to the wireless network, so as to implement data receiving and sending between the base station and the wireless network, for example, sending a control command, or the like. Specifically, the RF circuit 2202 receives and sends an RF signal, and the RF signal is also referred to as an electromagnetic signal. The RF circuit 2202 converts an electrical signal into an electromagnetic signal or converts an electromagnetic signal into an electrical signal, and communicates with a communications network and another device by using the electromagnetic signal. The RF circuit 2202 may include a known circuit used for executing these functions, and the circuit includes but is not limited to an antenna system, an RF transceiver, one or more amplifiers, a tuner, one or more oscillators, a digital signal processor, a CODEC chip set, a subscriber identity module (Subscriber Identity Module, SIM), or the like. The RF circuit may be a WiFi circuit, a Bluetooth circuit, or an infrared circuit, and is not limited herein.

Power management chip 2205: The power management chip 2205 is configured to supply power to and perform power management on the central processing unit 2203, and hardware that is connected to the peripheral interface.

The central processing unit 2203 specifically performs the following operations:
configuring a reference signal used for channel measurement on a first subframe of each data frame; and
configuring measurement resources used for interference measurement on target subframes of each data frame, where the target subframes are all subframes of each data frame or all subframes except the first subframe of each data frame.

The central processing unit specifically performs the following operation:
sending each configured data frame to the terminal, so that the terminal measures channel interference by using the measurement resources.

The central processing unit specifically performs the following operation:
configuring the measurement resources on all symbols of each target subframe, where
each measurement resource is on each resource block pair of each symbol; or
each measurement resource is on discontinuous resource block pairs of each symbol.

The central processing unit specifically performs the following operation:
measurement resources configured on adjacent symbols use subcarriers of a same frequency; or
measurement resources configured on adjacent symbols use subcarriers of different frequencies.

The foregoing describes the terminal in the embodiments of the present invention from a perspective of a cellular functional entity, and the following describes the terminal in the embodiments of the present invention from a perspective of hardware processing. Referring to FIG. 23, another embodiment of a terminal 2300 in the embodiments of the present invention includes.

It should be understood that, the terminal 2300 shown in the figure is merely an example of a wearable electronic device, and the terminal 2300 may have more or fewer parts than those shown in the figure, and may combine two or more parts or have different parts configurations. Various parts shown in the figure may be implemented in hardware that includes one or more signal processing circuits and/or application-specific integrated circuits, software, or a combination of hardware and software.

It should be noted that, the terminal 2300 provided in this embodiment is merely an example of the terminal. The terminal involved in this embodiment of the present invention may have more or fewer parts than those shown in FIG. 23, may combine two or more parts, or may have different part configurations or settings. Various parts may be implemented in hardware that includes one or more signal processing circuits and/or application-specific integrated circuits, software, or a combination of hardware and software.

The following describes in detail the terminal provided in this embodiment.

Memory 2301: The memory 2301 may be accessed by a central processing unit 2303, a peripheral interface 2304, or the like, and the memory 2301 may include a high-speed random access memory, and may further include a non-volatile memory, for example, one or more magnetic disk storage devices, a flash device, or another volatile solid-state storage device.

Peripheral interface 2304: The peripheral interface may connect device input and output peripherals to the central processing unit 2303 and the memory 2301.

RF circuit 2302: The RF circuit 2302 is mainly configured to establish communication between a base station and a wireless network, that is, each terminal device connected to the wireless network, so as to implement data receiving and sending between the base station and the wireless network, for example, sending a control command, or the like. Specifically, the RF circuit 2302 receives and sends an RF signal, and the RF signal is also referred to as an electromagnetic signal. The RF circuit 2302 converts an electrical signal into an electromagnetic signal or converts an electromagnetic signal into an electrical signal, and communicates with a communications network and another device by using the electromagnetic signal. The RF circuit 2302 may include a known circuit used for executing these functions, and the circuit includes but is not limited to an antenna system, an RF transceiver, one or more amplifiers, a tuner, one or more oscillators, a digital signal processor, a CODEC chip set, a subscriber identity module (Subscriber Identity Module, SIM), or the like. The RF circuit may be a WiFi circuit, a Bluetooth circuit, or an infrared circuit, and is not limited herein.

Power management chip 2305: The power management chip 2305 is configured to supply power to and perform power management on the central processing unit 2303, and hardware that is connected to the peripheral interface.

The central processing unit 2303 specifically performs the following operations:
configured to receiving data frames sent by a base station, where the base station has configured a reference signal used for channel measurement on a first subframe of each data frame;
detecting measurement resources that are used for interference measurement and configured on target subframes of each data frame, where the base station has configured the measurement resources on the target subframes of each data frame, and the target subframes are all subframes of each data frame or all subframes except the first subframe of each data frame;
measuring channel interference by using the detected measurement resources; and
a generation unit, configured to correspondingly generating channel state information CSI corresponding to each target subframe according to the measured channel interference.

The central processing unit specifically performs the following operation:
performing synchronization with the base station and channel measurement by using the reference signal, where the reference signal includes a synchronization signal used for synchronization and a cell-common reference signal CRS, and the cell-common reference signal CRS is used for frequency and time tracking and channel measurement.

The central processing unit specifically performs the following operations:
performing synchronization with the base station by using the synchronization signal and the cell-common reference signal CRS, where the reference signal includes the synchronization signal used for synchronization, the cell-common reference signal CRS used for frequency and time tracking, and a channel state information-reference signal CSI-RS used for channel measurement; and
performing channel measurement by using the channel state information-reference signal CSI-RS.

The central processing unit specifically performs the following operations:
detecting that the measurement resources are on all symbols of each target subframe, and each measurement resource is on each resource block pair of each symbol, or each measurement resource is on discontinuous resource block pairs of each symbol, where measurement resources configured on adjacent symbols use subcarriers of a same frequency, or measurement resources configured on adjacent symbols use subcarriers of different frequencies;
measuring the channel interference by using the detected measurement resources that are on all the symbols; and
correspondingly generating channel state information CSI corresponding to each symbol according to the measured channel interference.

It should be noted that persons of ordinary skill in the art may understand that all or a part of the processes of the methods in the foregoing embodiments may be implemented by a computer program instructing relevant hardware. The program may be stored in a computer readable storage medium. The processes of the methods in the foregoing embodiments may be performed when the program runs. The foregoing storage medium may be: a magnetic disk, an optical disc, a read-only memory, a random access memory, or the like.

The wireless communication method, the related device, and the system provided in the present invention are described in detail above. The principle and implementation manners of the present invention are described in this specification by using specific embodiments. The description about the embodiments is merely used only to help understand the method and core ideas of the present invention. In addition, persons of ordinary skill in the art may make variations and modifications to the present invention in terms of the specific implementation manners and application scopes according to the ideas of the present invention. Therefore, the content of this specification shall not be construed as a limitation to the present invention. The terms used in the embodiments of the present invention are merely for the purpose of illustrating specific embodiments, and are not intended to limit the present invention. The terms "a", "said" and "the" of singular forms used in the embodiments and the appended claims of the present invention are also intended to include plural forms, unless otherwise specified in the context clearly. It should also be understood that, the term "and/or" used herein indicates and includes any or all possible combinations of one or more associated listed items.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, may be located in one location, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A wireless communication method, comprising:
configuring (601), by a base station, a reference signal used for channel measurement on a first subframe of each data frame, wherein the reference signal is configured only on the first subframe of each data frame, and no reference signal is configured on a second to a tenth subframes in the data frame; and
configuring (602), by the base station, measurement resources used for interference measurement on target subframes of each data frame, wherein the target subframes are all subframes of each data frame or all subframes except the first subframe of each data frame, wherein the measurement resources are zero-power resources;
sending, by the base station, each configured data frame to a terminal, so that the terminal measures channel interference by using the measurement resources.

2. The wireless communication method according to claim 1, wherein the reference signal comprises a synchronization signal used for synchronization and a cell-common reference signal, CRS; and
the cell-common reference signal, CRS, is used for frequency and time tracking and channel measurement; or
wherein the reference signal comprises a synchronization signal used for synchronization, a cell-common reference signal, CRS, used for frequency and time tracking, and a channel state information-reference signal, CSI-RS, used for channel measurement.

3. The wireless communication method according to claim 1 or 2, wherein the configuring, by the base station, measurement resources used for interference measurement on target subframes of each data frame comprises:
configuring, by the base station, the measurement resources on all symbols of each target subframe, wherein
each measurement resource is on each physical resource block, PRB, pair of each symbol; or
each measurement resource is on discontinuous physical resource block, PRB, pairs of each symbol.

4. The wireless communication method according to claim 3, wherein the configuring, by the base station, the measurement resources on all symbols of each target subframe further comprises:
measurement resources configured on adjacent symbols by the base station use subcarriers of a same frequency; or
measurement resources configured on adjacent symbols by the base station use subcarriers of different frequencies.

5. The wireless communication method according to any one of clams 1 to 4, comprising:
receiving (1601), by the terminal, data frames sent by the base station, wherein the base station has configured the reference signal used for channel measurement on the first subframe of each data frame, wherein the reference signal is configured only on the first subframe of each data frame, and no reference signal is configured on a second to a tenth subframes in the data frame;
detecting (1602), by the terminal, measurement resources that are used for interference measurement and configured on target subframes of each data frame, wherein the base station has configured the measurement resources on the target subframes of each data frame, and the target subframes are all subframes of each data frame or all subframes except the first subframe of each data frame;
measuring (1603), by the terminal, channel interference by using the detected measurement resources, wherein the measurement resources are zero-power resources; and
correspondingly generating (1604), by the terminal, channel state information CSI corresponding to each target subframe according to the measured channel interference.

6. The wireless communication method according to claim 5, wherein the reference signal comprises a synchronization signal used for synchronization and a cell-common reference signal CRS, and the cell-common reference signal CRS is used for frequency and time tracking and channel measurement; and
after the receiving, by a terminal, data frames sent by a base station, the method further comprises:
performing, by the terminal, synchronization with the base station and channel measurement by using the reference signal; or
wherein the reference signal comprises a synchronization signal used for synchronization, a cell-common reference signal CRS used for frequency and time tracking, and a channel state information-reference signal CSI-RS used for channel measurement; and
after the receiving, by a terminal, data frames sent by a base station, the method further comprises:
performing, by the terminal, synchronization with the base station by using the synchronization signal and the cell-common reference signal CRS; and
performing, by the terminal, channel measurement by using the channel state information-reference signal CSI-RS.

7. The wireless communication method according to claim 5 or 6, wherein the detecting, by the terminal, measurement resources that are used for interference measurement and configured on target subframes of each data frame comprises:
detecting, by the terminal, that the measurement resources are on all symbols of each target subframe, and each measurement resource is on each physical resource block, PRB, pair of each symbol, or each measurement resource is on discontinuous physical resource block, PRB, pairs of each symbol, wherein measurement resources configured on adjacent symbols use subcarriers of a same frequency, or measurement resources configured on adjacent symbols use subcarriers of different frequencies;
the measuring, by the terminal, channel interference by using the detected measurement resources comprises:
measuring, by the terminal, the channel interference by using the detected measurement resources that are on all the symbols; and
the correspondingly generating, by the terminal, channel state information ,CSI, corresponding to each target subframe according to the measured channel interference comprises:
correspondingly generating, by the terminal, channel state information CSI corresponding to each symbol according to the measured channel interference.

8. A wireless communication system comprising a base station, wherein the base station comprises:
a first configuration unit (1901), configured to configure a reference signal used for channel measurement on a first subframe of each data frame, wherein the reference signal is configured only on the first subframe of each data frame, and no reference signal is configured on a second to a tenth subframes in the data frame; and
a second configuration unit (1902), configured to configure measurement resources used for interference measurement on target subframes of each data frame, wherein the target subframes are all subframes of each data frame or all subframes except the first subframe of each data frame, wherein the measurement resources are zero-power resources;
a sending unit (1903), configured to send each configured data frame to the terminal, so that the terminal measures channel interference by using the measurement resources.

9. The wireless communication system according to claim 8, wherein the second configuration unit comprises:
a first configuration module (19021), configured to configure the measurement resources on all symbols of each target subframe, wherein each measurement resource is on each physical resource block, PRB, pair of each symbol; or
a second configuration module (19022), configured to configure the measurement resources on all symbols of each target subframe, wherein each measurement resource is on discontinuous physical resource block, PRB, pairs of each symbol.

10. The wireless communication system according to claim 9, wherein
the first configuration module is further configured to: measurement resources configured on adjacent symbols use subcarriers of a same frequency, or measurement resources configured on adjacent symbols use subcarriers of different frequencies; or
the second configuration module is further configured to: measurement resources configured on adjacent symbols use subcarriers of a same frequency, or measurement resources configured on adjacent symbols use subcarriers of different frequencies.

11. The wireless communication system according to any one of claims 8 to 10 further comprising a terminal, wherein, the terminal comprises:
a receiving unit (2001), configured to receive data frames sent by the base station, wherein the base station has configured the reference signal used for channel measurement on the first subframe of each data frame, wherein the reference signal is configured only on the first subframe of each data frame, and no reference signal is configured on a second to a tenth subframes in the data frame;
a first detection unit (2002), configured to detect measurement resources that are used for interference measurement and configured on target subframes of each data frame, wherein the base station has configured the measurement resources on the target subframes of each data frame, and the target subframes are all subframes of each data frame or all subframes except the first subframe of each data frame, wherein the measurement resources are zero-power resources;
a second detection unit (2003), configured to measure channel interference by using the detected measurement resources; and
a generation unit (2004), configured to correspondingly generate channel state information CSI corresponding to each target subframe according to the measured channel interference.

12. The wireless communication system according to claim 11, wherein the terminal further comprises:
a first measurement unit (2102), configured to perform synchronization with the base station and channel measurement by using the reference signal, wherein the reference signal comprises a synchronization signal used for synchronization and a cell-common reference signal CRS, and the cell-common reference signal CRS is used for frequency and time tracking and channel measurement; or
wherein the terminal further comprises:
a synchronization unit (2103), configured to perform synchronization with the base station by using a synchronization signal and a cell-common reference signal CRS, wherein the reference signal comprises the synchronization signal used for synchronization, the cell-common reference signal CRS used for frequency and time tracking, and a channel state information-reference signal CSI-RS used for channel measurement; and
a second measurement unit (2104), configured to perform channel measurement by using the channel state information-reference signal CSI-RS.

13. The wireless communication system according to claim 11 or 12, wherein the first detection unit is further configured to detect that the measurement resources are on all symbols of each target subframe, and each measurement resource is on each physical resource block, PRB, pair of each symbol, or each measurement resource is on discontinuous physical resource block, PRB, pair s of each symbol, wherein measurement resources configured on adjacent symbols use subcarriers of a same frequency, or measurement resources configured on adjacent symbols use subcarriers of different frequencies;
the second detection unit is further configured to measure the channel interference by using the detected measurement resources that are on all the symbols; and
the generation unit is further configured to correspondingly generate channel state information CSI corresponding to each symbol according to the measured channel interference.

## Patentansprüche

1. Drahtloskommunikationsverfahren, aufweisend:
Konfigurieren (601), durch eine Basisstation, eines Referenzsignals, das für Kanalmessung an einem ersten Subframe von jedem Datenframe verwendet wird, wobei das Referenzsignal nur am ersten Subframe von jedem Datenframe konfiguriert wird und kein Referenzsignal an einem zweiten bis zehnten Subframe im Datenframe konfiguriert wird; und
Konfigurieren (602), durch die Basisstation, von Messressourcen, die für Interferenzmessung an Zielsubframes von jedem Datenframe verwendet werden, wobei die Zielsubframes alle Subframes von jedem Datenframe oder alle Subframes unter Ausnahme des ersten Subframes von jedem Datenframe sind, wobei die Messressourcen Nullleistungsressourcen sind;
Senden, durch die Basisstation, von jedem konfigurierten Datenframe an ein Endgerät, sodass das Endgerät Kanalinterferenz durch Verwenden der Messressourcen misst.

2. Drahtloskommunikationsverfahren nach Anspruch 1, wobei das Referenzsignal ein Synchronisationssignal, das zur Synchronisation verwendet wird, und ein zellengemeinsames Referenzsignal, CRS, aufweist; und
wobei das zellengemeinsame Referenzsignal, CRS, zur Frequenz- und Zeitverfolgung und Kanalmessung verwendet wird; oder
wobei das Referenzsignal ein Synchronisationssignal, das zur Synchronisation verwendet wird, ein zellengemeinsames Referenzsignal, CRS, das zur Frequenz- und Zeitverfolgung verwendet wird, und ein Kanalzustandsinformations-Referenzsignal, CSI-RS, aufweist, das zur Kanalmessung verwendet wird.

3. Drahtloskommunikationsverfahren nach einem der Ansprüche 1 oder 2, wobei das Konfigurieren, durch die Basisstation, von Messressourcen, die für Interferenzmessung an Zielsubframes von jedem Datenframe verwendet werden, aufweist:
Konfigurieren, durch die Basisstation, der Messressourcen an allen Zeichen von jedem Zielsubframe, wobei
jede Messressource an jedem physikalischen Ressourcenblock-, PRB-, Paar von jedem Zeichen ist; oder
jede Messressource an unterbrochenen physikalischen Ressourcenblock-, PRB-, Paaren von jedem Zeichen ist.

4. Drahtloskommunikationsverfahren nach Anspruch 3, wobei das Konfigurieren, durch die Basisstation, der Messressourcen an allen Zeichen von jedem Zielsubframe ferner aufweist:
Messressourcen, die an benachbarten Zeichen durch die Basisstation konfiguriert werden, verwenden Zwischenträger einer gleichen Frequenz; oder
Messressourcen, die an benachbarten Zeichen durch die Basisstation konfiguriert werden, verwenden Zwischenträger verschiedener Frequenzen.

5. Drahtloskommunikationsverfahren nach einem der Ansprüche 1 bis 4, aufweisend:
Empfangen (1601), durch das Endgerät, von Datenframes, die durch die Basisstation gesendet werden, wobei die Basisstation das Referenzsignal, das für Kanalmessung am ersten Subframe von jedem Datenframe verwendet wird, konfiguriert hat, wobei das Referenzsignal nur am ersten Subframe von jedem Datenframe konfiguriert wird und kein Referenzsignal an einem zweiten bis zehnten Subframe im Datenframe konfiguriert wird;
Erkennen (1602), durch das Endgerät, von Messressourcen, die für Interferenzmessung an Zielsubframes von jedem Datenframe verwendet werden und an Zielsubframes von jedem Datenframe konfiguriert werden, wobei die Basisstation die Messressourcen an den Zielsubframes von jedem Datenframe konfiguriert hat und die Zielsubframes alle Subframes von jedem Datenframe oder alle Subframes unter Ausnahme des ersten Subframes von jedem Datenframe sind;
Messen (1603), durch das Endgerät, von Kanalinterferenz durch Verwenden der erkannten Messressourcen, wobei die Messressourcen Nullleistungsressourcen sind; und
entsprechendes Erstellen (1604), durch das Endgerät, von Kanalzustandsinformation CSI, die jedem Zielsubframe entspricht, gemäß der gemessenen Kanalinterferenz.

6. Drahtloskommunikationsverfahren nach Anspruch 5, wobei das Referenzsignal ein Synchronisationssignal, das zur Synchronisation verwendet wird, und ein zellengemeinsames Referenzsignal CRS aufweist und das zellengemeinsame Referenzsignal CRS zur Frequenz- und Zeitverfolgung und Kanalmessung verwendet wird; und
wobei nach dem Empfangen, durch das Endgerät, von Datenframes, die durch eine Basisstation gesendet werden, das Verfahren ferner aufweist:
Ausführen, durch das Endgerät, von Synchronisation mit der Basisstation und Kanalmessung durch Verwenden des Referenzsignals; oder
wobei das Referenzsignal ein Synchronisationssignal, das zur Synchronisation verwendet wird, ein zellengemeinsames Referenzsignal CRS, das zur Frequenz- und Zeitverfolgung verwendet wird, und ein Kanalzustandsinformations-Referenzsignal CSI-RS aufweist, das zur Kanalmessung verwendet wird; und
wobei nach dem Empfangen, durch das Endgerät, von Datenframes, die durch eine Basisstation gesendet werden, das Verfahren ferner aufweist:
Ausführen, durch das Endgerät, von Synchronisation mit der Basisstation durch Verwenden des Synchronisationssignals und des zellengemeinsamen Referenzsignals CRS; und
Ausführen, durch das Endgerät, von Kanalmessung durch Verwenden des Kanalzustandsinformations-Referenzsignals CSI-RS.

7. Drahtloskommunikationsverfahren nach einem der Ansprüche 5 oder 6, wobei das Erkennen, durch das Endgerät, von Messressourcen, die für Interferenzmessung verwendet werden und an Zielsubframes von jedem Datenframe konfiguriert werden, aufweist:
Erkennen, durch das Endgerät, dass die Messressourcen an allen Zeichen von jedem Zielsubframe sind und jede Messressource an jedem physikalischen Ressourcenblock-, PRB-, Paar von jedem Zeichen ist oder jede Messressource an unterbrochenen physikalischen Ressourcenblock-, PRB-, Paaren von jedem Zeichen ist, wobei Messressourcen, die an benachbarten Zeichen durch die Basisstation konfiguriert werden, Zwischenträger einer gleichen Frequenz verwenden, oder Messressourcen, die an benachbarten Zeichen durch die Basisstation konfiguriert werden, Zwischenträger verschiedener Frequenzen verwenden;
wobei das Messen, durch das Endgerät, von Kanalinterferenz durch Verwenden der erkannten Messressourcen aufweist:
Messen, durch das Endgerät, von Kanalinterferenz durch Verwenden der erkannten Messressourcen, die an allen den Zeichen sind; und
wobei das entsprechende Erstellen, durch das Endgerät, von Kanalzustandsinformation, CSI, die jedem Zielsubframe entspricht, gemäß der gemessenen Kanalinterferenz aufweist:
entsprechendes Erstellen, durch das Endgerät, von Kanalzustandsinformation CSI, die jedem Zeichen entspricht, gemäß der gemessenen Kanalinterferenz.

8. Drahtloskommunikationssystem, das eine Basisstation aufweist, wobei die Basisstation aufweist:
eine erste Konfigurationseinheit (1901), die zum Konfigurieren eines Referenzsignals, das für Kanalmessung an einem ersten Subframe von jedem Datenframe verwendet wird, konfiguriert ist, wobei das Referenzsignal nur am ersten Subframe von jedem Datenframe konfiguriert wird und kein Referenzsignal an einem zweiten bis zehnten Subframe im Datenframe konfiguriert wird; und
eine zweite Konfigurationseinheit (1902), die zum Konfigurieren von Messressourcen, die für Interferenzmessung an Zielsubframes von jedem Datenframe verwendet werden, konfiguriert ist, wobei die Zielsubframes alle Subframes von jedem Datenframe oder alle Subframes unter Ausnahme des ersten Subframes von jedem Datenframe sind, wobei die Messressourcen Nullleistungsressourcen sind;
eine Sendeeinheit (1903), die zum Senden von jedem konfigurierten Datenframe an ein Endgerät konfiguriert ist, sodass das Endgerät Kanalinterferenz durch Verwenden der Messressourcen misst.

9. Drahtloskommunikationssystem nach Anspruch 8, wobei die zweite Konfigurationseinheit aufweist:
ein erstes Konfigurationsmodul (19021), das zum Konfigurieren der Messressourcen an allen Zeichen von jedem Zielsubframe konfiguriert ist, wobei jede Messressource an jedem physikalischen Ressourcenblock-, PRB-, Paar von jedem Zeichen ist; oder ein zweites Konfigurationsmodul (19022), das zum Konfigurieren der Messressourcen an allen Zeichen von jedem Zielsubframe konfiguriert ist, wobei jede Messressource an unterbrochenen physikalischen Ressourcenblock-, PRB-, Paaren von jedem Zeichen ist.

10. Drahtloskommunikationssystem nach Anspruch 9, wobei:
das erste Konfigurationsmodul ferner zu Folgendem konfiguriert ist: Messressourcen, die an benachbarten Zeichen konfiguriert werden, verwenden Zwischenträger einer gleichen Frequenz, oder Messressourcen, die an benachbarten Zeichen konfiguriert werden, verwenden Zwischenträger verschiedener Frequenzen; oder
das zweite Konfigurationsmodul ferner zu Folgendem konfiguriert ist: Messressourcen, die an benachbarten Zeichen konfiguriert werden, verwenden Zwischenträger einer gleichen Frequenz, oder Messressourcen, die an benachbarten Zeichen konfiguriert werden, verwenden Zwischenträger verschiedener Frequenzen.

11. Drahtloskommunikationssystem nach einem der Ansprüche 8 bis 10, ferner aufweisend ein Endgerät, wobei das Endgerät aufweist:
eine Empfangseinheit (2001), die zum Empfangen von Datenframes, die durch die Basisstation gesendet werden, konfiguriert ist, wobei die Basisstation das Referenzsignal, das für Kanalmessung am ersten Subframe von jedem Datenframe verwendet wird, konfiguriert hat, wobei das Referenzsignal nur am ersten Subframe von jedem Datenframe konfiguriert wird und kein Referenzsignal an einem zweiten bis zehnten Subframe im Datenframe konfiguriert wird;
eine erste Erkennungseinheit (2002), die zum Erkennen von Messressourcen, die für Interferenzmessung an Zielsubframes von jedem Datenframe verwendet werden und an Zielsubframes von jedem Datenframe konfiguriert werden, konfiguriert ist, wobei die Basisstation die Messressourcen an den Zielsubframes von jedem Datenframe konfiguriert hat und die Zielsubframes alle Subframes von jedem Datenframe oder alle Subframes unter Ausnahme des ersten Subframes von jedem Datenframe sind, wobei die Messressourcen Nullleistungsressourcen sind;
eine zweite Erkennungseinheit (2003), die zum Messen von Kanalinterferenz durch Verwenden der erkannten Messressourcen konfiguriert ist; und
eine Erstellungseinheit (2004), die zum entsprechenden Erstellen von Kanalzustandsinformation CSI, die jedem Zielsubframe entspricht, gemäß der gemessenen Kanalinterferenz konfiguriert ist.

12. Drahtloskommunikationssystem nach Anspruch 11, wobei das Endgerät ferner aufweist:
eine erste Messeinheit (2102), die zum Ausführen von Synchronisation mit der Basisstation und Kanalmessung durch Verwenden des Referenzsignals konfiguriert ist, wobei das Referenzsignal ein Synchronisationssignal, das zur Synchronisation verwendet wird, und ein zellengemeinsames Referenzsignal CRS aufweist, und wobei das zellengemeinsame Referenzsignal CRS zur Frequenz- und Zeitverfolgung und Kanalmessung verwendet wird; oder
wobei das Endgerät ferner aufweist:
eine Synchronisationseinheit (2103), die zum Ausführen von Synchronisation mit der Basisstation durch Verwenden eines Synchronisationssignals und eines zellengemeinsamen Referenzsignals CRS konfiguriert ist, wobei das Referenzsignal das Synchronisationssignal, das zur Synchronisation verwendet wird, das zellengemeinsame Referenzsignal CRS, das zur Frequenz- und Zeitverfolgung verwendet wird, und ein Kanalzustandsinformations-Referenzsignal CSI-RS aufweist, das zur Kanalmessung verwendet wird; und
eine zweite Messeinheit (2104), die zum Ausführen von Kanalmessung durch Verwenden des Kanalzustandsinformations-Referenzsignals CSI-RS konfiguriert ist.

13. Drahtloskommunikationssystem nach einem der Ansprüche 11 oder 12, wobei die erste Erkennungseinheit ferner zum Erkennen konfiguriert ist, dass die Messressourcen an allen Zeichen von jedem Zielsubframe sind und jede Messressource an jedem physikalischen Ressourcenblock-, PRB-, Paar von jedem Zeichen ist oder jede Messressource an unterbrochenen physikalischen Ressourcenblock-, PRB-, Paaren von jedem Zeichen ist, wobei Messressourcen, die an benachbarten Zeichen konfiguriert werden, Zwischenträger einer gleichen Frequenz verwenden, oder Messressourcen, die an benachbarten Zeichen durch die Basisstation konfiguriert werden, Zwischenträger verschiedener Frequenzen verwenden;
die zweite Erkennungseinheit ferner zum Messen der Kanalinterferenz durch Verwenden der erkannten Messressourcen, die an allen den Zeichen sind, konfiguriert ist; und
die Erstellungseinheit ferner zum entsprechenden Erstellen von Kanalzustandsinformation CSI, die jedem Zeichen entspricht, gemäß der gemessenen Kanalinterferenz konfiguriert ist.

## Revendications

1. Procédé de communication sans fil, comprenant les étapes consistant à :
configurer (601), par une station de base, un signal de référence utilisé pour la mesure du canal sur une première sous-trame de chaque trame de données, dans lequel le signal de référence est configuré uniquement sur la première sous-trame de chaque trame de données, et aucun signal de référence n'est configuré entre une seconde et une dixième sous-trame de la trame de données ; et
configurer (602), par une station de base, des ressources de mesure utilisées pour la mesure des interférences sur des sous-trames de destination de chaque trame de données, dans lequel les sous-trames de destination sont toutes les sous-trames de chaque trame de données ou toutes les sous-trames sauf la première sous-trame de chaque trame de données, dans lequel les ressources de mesure sont des ressources à puissance nulle ;
envoyer, par la station de base, chaque trame de données configurée à un terminal, de sorte que le terminal mesure les interférences du canal en utilisant les ressources de mesure.

2. Procédé de communication sans fil selon la revendication 1, dans lequel le signal de référence comprend un signal de synchronisation utilisé pour la synchronisation et un signal de référence commun aux cellules, CRS (cell-common reference signal) ; et
le signal de référence commun aux cellules, CRS, est utilisé pour le suivi de la fréquence et du temps et la mesure du canal ; ou
dans lequel le signal de référence comprend un signal de synchronisation utilisé pour la synchronisation, un signal de référence commun aux cellules, CRS, utilisé pour le suivi de la fréquence et du temps, et un signal de référence d'informations sur l'état du canal, CSI-RS (channel state information-reference signal), utilisé pour la mesure du canal.

3. Procédé de communication sans fil selon la revendication 1 ou 2, dans lequel la configuration, par la station de base, des ressources de mesure utilisées pour la mesure des interférences sur les sous-trames de destination de chaque trame de données comprend l'étape consistant à :
configurer, par la station de base, les ressources de mesure sur tous les symboles de chaque sous-trame de destination, dans lequel
chaque ressource de mesure se trouve sur chaque paire de blocs de ressources physiques, PRB (physical resource block), de chaque symbole ; ou
chaque ressource de mesure se trouve sur des paires discontinues de blocs de ressources physiques, PRB, de chaque symbole.

4. Procédé de communication sans fil selon la revendication 3, dans lequel la configuration, par la station de base, des ressources de mesure sur tous les symboles de chaque sous-trame de destination comprend en outre le fait que :
des ressources de mesure configurées sur des symboles adjacents par la station de base en utilisant des sous-porteuses d'une même fréquence ; ou
des ressources de mesure configurées sur des symboles adjacents par la station de base utilisent des sous-porteuses de fréquences différentes.

5. Procédé de communication sans fil selon l'une quelconque des revendications 1 à 4, comprenant les étapes consistant à :
recevoir (1601), par le terminal, des trames de données envoyées par la station de base, dans lequel la station de base a configuré le signal de référence utilisé pour la mesure du canal sur la première sous-trame de chaque trame de données, dans lequel le signal de référence est configuré uniquement sur la première sous-trame de chaque trame de données, et aucun signal de référence n'est configuré entre une seconde et une dixième sous-trames de la trame de données ;
détecter (1602), par le terminal, des ressources de mesure qui sont utilisées pour la mesure des interférences et configurées sur des sous-trames de destination de chaque trame de données, dans lequel la station de base a configuré les ressources de mesure sur les sous-trames de destination de chaque trame de données, et les sous-trames de destination sont toutes les sous-trames de chaque trame de données ou toutes les sous-trames sauf la première sous-trame de chaque trame de données ;
mesurer (1603), par le terminal, les interférences du canal en utilisant les ressources de mesure détectées, dans lequel les ressources de mesure sont des ressources à puissance nulle ; et
générer de manière correspondante (1604), par le terminal, des informations sur l'état du canal, CSI (channel state information), correspondant à chaque sous-trame de destination en fonction des interférences du canal mesurées.

6. Procédé de communication sans fil selon la revendication 5, dans lequel le signal de référence comprend un signal de synchronisation utilisé pour la synchronisation et un signal de référence commun aux cellules, CRS, et le signal de référence commun aux cellules, CRS, est utilisé pour le suivi de la fréquence et du temps et la mesure du canal ; et
après la réception par un terminal des trames de données envoyées par une station de base, le procédé comprend en outre l'étape consistant à :
effectuer, par le terminal, une synchronisation avec la station de base et une mesure du canal en utilisant le signal de référence ; ou
dans lequel le signal de référence comprend un signal de synchronisation utilisé pour la synchronisation, un signal de référence commun aux cellules, CRS, utilisé pour le suivi de la fréquence et du temps, et un signal de référence d'informations sur l'état du canal, CSI-RS, utilisé pour la mesure du canal ; et
après la réception par un terminal des trames de données envoyées par une station de base, le procédé comprend en outre les étapes consistant à :
effectuer, par le terminal, une synchronisation avec la station de base en utilisant le signal de synchronisation et le signal de référence commun aux cellules CRS ; et effectuer, par le terminal, une mesure du canal en utilisant le signal de référence d'information sur l'état du canal CSI-RS.

7. Procédé de communication sans fil selon la revendication 5 ou 6, dans lequel la détection, par le terminal, des ressources de mesure qui sont utilisées pour la mesure des interférences et configurées sur les sous-trames de destination de chaque trame de données comprend l'étape consistant à :
détecter, par le terminal, que les ressources de mesure se trouvent sur tous les symboles de chaque sous-trame de destination, et chaque ressource de mesure se trouve sur chaque paire de blocs de ressources physiques, PRB, de chaque symbole, ou chaque ressource de mesure se trouve sur des paires discontinues de blocs de ressources physiques, PRB, de chaque symbole, dans lequel les ressources de mesure configurées sur des symboles adjacents utilisent des sous-porteuses d'une même fréquence, ou les ressources de mesure configurées sur des symboles adjacents utilisent des sous-porteuses de fréquences différentes ;
mesurer, par le terminal, les interférences du canal en utilisant les ressources de mesure détectées comprend l'étape consistant à :
mesurer, par le terminal, les interférences du canal en utilisant les ressources de mesure détectées qui figurent sur tous les symboles ; et
la génération de manière correspondante, par le terminal, des informations sur l'état du canal, CSI, correspondant à chaque sous-trame de destination en fonction des interférences du canal mesurées comprend l'étape consistant à :
générer de manière correspondante, par le terminal, des informations sur l'état du canal, CSI, correspondant à chaque symbole en fonction des interférences du canal mesurées.

8. Système de communication sans fil comprenant une station de base, dans lequel la station de base comprend :
une première unité de configuration (1901), configurée pour configurer un signal de référence utilisé pour la mesure du canal sur une première sous-trame de chaque trame de données, dans lequel le signal de référence est configuré uniquement sur la première sous-trame de chaque trame de données, et aucun signal de référence n'est configuré entre une seconde et une dixième sous-trame de la trame de données ; et
une seconde unité de configuration (1902), configurée pour configurer des ressources de mesure utilisées pour la mesure des interférences sur des sous-trames de destination de chaque trame de données, dans lequel les sous-trames de destination sont toutes les sous-trames de chaque trame de données ou toutes les sous-trames sauf la première sous-trame de chaque trame de données, dans lequel les ressources de mesure sont des ressources à puissance nulle ;
une unité d'émission (1903), configurée pour envoyer chaque trame de données configurée au terminal, de sorte que le terminal mesure les interférences du canal en utilisant les ressources de mesure.

9. Système de communication sans fil selon la revendication 8, dans lequel la seconde unité de configuration comprend :
un premier module de configuration (19021), configuré pour configurer les ressources de mesure sur tous les symboles de chaque sous-trame de destination, dans lequel chaque ressource de mesure se trouve sur chaque paire de blocs de ressources physiques, PRB, de chaque symbole ; ou
un second module de configuration (19022), configuré pour configurer les ressources de mesure sur tous les symboles de chaque sous-trame de destination, dans lequel chaque ressource de mesure se trouve sur des paires discontinues de blocs de ressources physiques, PRB, de chaque symbole.

10. Système de communication sans fil selon la revendication 9, dans lequel le premier module de configuration est en outre configuré de sorte que : des ressources de mesure configurées sur des symboles adjacents en utilisant des sous-porteuses d'une même fréquence, ou des ressources de mesure configurées sur des symboles adjacents utilisent des sous-porteuses de fréquences différentes ; ou
le second module de configuration est en outre configuré de sorte que : des ressources de mesure configurées sur des symboles adjacents utilisent des sous-porteuses d'une même fréquence, ou des ressources de mesure configurées sur des symboles adjacents utilisent des sous-porteuses de fréquences différentes.

11. Système de communication sans fil selon l'une quelconque des revendications 8 à 10, comprenant en outre un terminal, dans lequel le terminal comprend :
une unité de réception (2001), configurée pour recevoir des trames de données envoyées par la station de base, dans lequel la station de base a configuré le signal de référence utilisé pour la mesure du canal sur la première sous-trame de chaque trame de données, dans lequel le signal de référence est configuré uniquement sur la première sous-trame de chaque trame de données, et aucun signal de référence n'est configuré entre une seconde et une dixième sous-trame de la trame de données ;
une première unité de détection (2002), configurée pour détecter des ressources de mesure qui sont utilisées pour la mesure des interférences et configurées sur Ides sous-trames de destination de chaque trame de données, dans lequel la station de base a configuré les ressources de mesure sur les sous-trames de destination de chaque trame de données, et les sous-trames de destination sont toutes les sous-trames de chaque trame de données ou toutes les sous-trames sauf la première sous-trame de chaque trame de données, dans lequel les ressources de mesure sont des ressources à puissance nulle ;
une seconde unité de détection (2003), configurée pour mesurer les interférences du canal en utilisant les ressources de mesure détectées ; et
une unité de génération (2004), configurée pour générer de manière correspondante des informations sur l'état du canal, CSI, correspondant à chaque sous-trame de destination en fonction des interférences du canal mesurées.

12. Système de communication sans fil selon la revendication 11, dans lequel le terminal comprend en outre :
une première unité de mesure (2102), configurée pour effectuer une synchronisation avec la station de base et une mesure du canal en utilisant le signal de référence, dans lequel le signal de référence comprend un signal de synchronisation utilisé pour la synchronisation et un signal de référence commun aux cellules, CRS, et le signal de référence commun aux cellules, CRS, est utilisé pour le suivi de la fréquence et du temps et la mesure du canal ; ou
dans lequel le terminal comprend en outre :
une unité de synchronisation (2103), configurée pour effectuer une synchronisation avec la station de base en utilisant un signal de synchronisation et un signal de référence commun aux cellules, CRS, dans lequel le signal de référence comprend le signal de synchronisation utilisé pour la synchronisation, le signal de référence commun aux cellules, CRS, utilisé pour le suivi de la fréquence et du temps, et un signal de référence d'informations sur l'état du canal, CSI-RS, utilisé pour la mesure du canal ; et
une seconde unité de mesure (2104), configurée pour effectuer une mesure du canal en utilisant le signal de référence d'informations sur l'état du canal CSI-RS.

13. Système de communication sans fil selon la revendication 11 ou 12, dans lequel la première unité de détection est en outre configurée pour détecter que les ressources de mesure se trouvent sur tous les symboles de chaque sous-trame de destination, et chaque ressource de mesure se trouve sur chaque paire de blocs de ressources physiques, PRB, de chaque symbole, ou chaque ressource de mesure se trouve sur des paires discontinues de blocs de ressources physiques, PRB, de chaque symbole, dans lequel les ressources de mesure configurées sur des symboles adjacents utilisent des sous-porteuses d'une même fréquence, ou les ressources de mesure configurées sur des symboles adjacents utilisent des sous-porteuses de fréquences différentes ;
la seconde unité de détection est en outre configurée pour mesurer les interférences du canal en utilisant les ressources de mesure détectées qui figurent sur tous les symboles ; et
l'unité de génération est en outre configurée pour générer de manière correspondante des informations sur l'état du canal, CSI, correspondant à chaque symbole en fonction des interférences du canal mesurées.
